# EUROPEAN PATENT SPECIFICATION

(11) **EP 2 344 919 B1**
(45) Date of publication and mention of the grant of the patent: **27.05.2015**
(21) Application number: 09747965.3
(22) Date of filing: 27.10.2009
(51) Int. Cl.: G02B 6/44

(54) **VARIABLY CONFIGURABLE AND MODULAR LOCAL CONVERGENCE POINT**
VARIABEL KONFIGURIERBARER UND MODULARER LOKALER KONVERGENZPUNKT
POINT DE CONVERGENCE LOCAL À CONFIGURATION VARIABLE ET MODULAIRE

(30) Priority: 27.10.2008 US 108788 P; 28.01.2009 US 206119 P
(43) Date of publication of application: 20.07.2011
(73) Proprietor: Corning Cable Systems LLC, Hickory NC 28602 (US)
(72) Inventor: CONNER, Mark E., Granite Falls North Carolina 28630 (US); GIRAUD, William J., Azle Texas 76020 (US); NORED, Lee W., Watauga, Texas 76148 (US); SCHNICK, Gary B., Granite Falls North Carolina 28630 (US)
(74) Representative: Sturm, Christoph
(86) International application number: PCT/US2009/062266
(87) International publication number: WO 2010/062626

(56) References cited:
- EP-A- 1 621 907
- DE-U1- 29 800 194
- US-A- 5 884 002
- US-A1- 2008 063 350

## Description

### CROSS-REFERENCE TO RELATED APPLICATIONS

The present application claims the benefit of U.S. Provisional Application Serial No. 61/108,788, filed October 27, 2008, and to U.S. Provisional Application Serial No. 61/206,119, filed January 28, 2009.

### BACKGROUND

### Field of the Invention

The present invention relates generally to fiber optic terminals, and more particularly to a fiber optic terminal which provide a local convergence point between a service provider and a subscriber in a fiber optic network that has a small form factor and is variably configurable and modular.

### Technical Background

Fiber optic terminals in a fiber optic network may be referred to as local convergence points (LCP), fiber distribution terminals (FDT), fiber distribution hubs (FDH), and the like. Such fiber optic terminals are typically cabinets or enclosures which may house fiber connection points, splices and splitters. The splitters split an optical signal from a network operator or service provider into many optical signals for distribution to subscribers. This enables the transmission of optical signals over optical fibers connected to the terminals and extended towards the subscriber premises in the optical networks. Thus, the fiber optic terminal provides a convergence point for the fibers and the optical signals between the network operator or service provider and the subscriber. The convergence point offers management capabilities to the network operator or service provider. However, current fiber optic terminals lack features and design which would be beneficial in deploying an all-fiber access network, especially for broadband service providers, such as cable TV companies, and others, including, but not limited to, telcos, CLECs and municipalities.

A fiber optic terminal according to the preamble of claim 1 is disclosed by DE 298 00 194 U1. Other prior art is disclosed by EP 1621907 A, by US 5 884 002 A and by US 2008/063350 A1.

### SUMMARY OF THE DETAILED DESCRIPTION

Embodiments disclosed herein include a fiber optic terminal as a local convergence point in a fiber optic network. The fiber optic terminal has an enclosure having a base and a cover which define an interior space. A feeder cable having at least one optical fiber and a distribution cable having at least one optical fiber are received into the interior space through a feeder cable port and a distribution cable port, respectively. A movable chassis positions in the interior space and is movable between a first position, a second position and third position. The movable chassis has a splitter holder area, a cassette area and a parking area. At least one cassette movably positions in the cassette area. A splitter module holder having a splitter module movably positioned therein movably positions in the splitter holder area. The optical fiber of the feeder cable and the optical fiber of the distribution cable are optically connected through the cassette. The optical connection between the optical fiber of the feeder cable and the optical fiber of the distribution cable may be made through the splitter module. In such case, the optical fiber of the feeder cable optically connects to an input optical fiber of the splitter module, where the optical signal is split into a plurality of output optical signals carried by output optical fibers in the form of splitter legs. One of the plurality of output optical fibers or splitter legs connects to the optical fiber of the distribution cable for distribution towards a subscriber premises. Additionally, one of the output fibers or splitter legs may connect to a connector holder in the parking area. The interior space is variably configurable by changeably positioning at the least one cassettes and the splitter modules in the movable chassis. The at least one cassette may be a feeder cassette and/or a distribution cassette.

When the enclosure is closed, the movable chassis positions in the first position. In the first position, the movable chassis positions in the base adjacent to a back of the base. When the enclosure is opened, the movable chassis automatically moves from the first position to the second position In the second position, the movable chassis is partially extended from the base and tilted away from the cover. The second position facilitates access to the cassettes and the splitter modules. Also when the enclosure is open, the movable chassis may position in the third position. In the third position, the movable chassis positions in the cover. When the movable chassis is in the third position, access to a fiber management area in the base is provided.

A protective shield movably attaches to the movable chassis. The protective shield rotates or pivots between a covered position arid a raised position. In the covered position, the protective shield covers at least a portion of the movable chassis including the splitter module holder, the feeder cassettes, the distribution cassettes, and the parking area.

### BRIEF DESCRIPTION OF THE FIGURES

**FIG. 1** is a front, perspective view of an exemplary embodiment of a fiber optic terminal installed in an aerial environment from a strand with the cover opened showing splice holder modules, feeder cassettes, distribution cassettes, connector holder block mounted in a movable chassis; and other components located therein;
**FIG. 2** is a front, perspective view of the fiber optic terminal of **FIG. 1****,** with the optical components removed to illustrate guide rails used to mount the splice holder modules, feeder cassettes, distribution cassettes in the movable chassis, and a parking area for mounting the connector holder block in the movable chassis;
**FIG. 3** is a left side elevation of the fiber optic terminal of **FIG. 1** illustrating a connection assembly between the cover, the movable chassis and a base of the fiber optic terminal and the movable chassis in an extended position;
**FIG. 4** is a partial detail of a right side elevation of the fiber optic terminal of FIG. 1 illustrating the connection assembly between the movable chassis and the base;
**FIG. 5** is a front, perspective view of the open fiber optic terminal of **FIG. 1****,** with a protective shield covering the splice holder modules, feeder cassettes, distribution cassettes, connector holder block mounted in a movable chassis;
**FIGS. 6** is a right side elevation of the fiber optic terminal of **FIG. 1** with the cover closed illustrating the arrangement of the movable chassis in a base position;
**FIG. 7** is a front, perspective view of the fiber optic terminal of **FIG. 1** illustrating the movable chassis in a cover position and components mounted in the base;
**FIG. 8** is a top, perspective view of a splitter module holder without splitter modules mounted therein;
**FIG. 9** is a top, perspective view of the splitter module holder of **FIG. 7** including splitter modules mounted therein;
**FIG. 10** is a top, perspective view of a cassette with a front section and a rear section and cassette cover closed over the rear section, and a frame assembly in a first position at the front section;
**FIG. 11** is a top, perspective view of the cassette of **FIG. 10** with the frame assembly rotated to a second position;
**FIG. 12** is a top, perspective view of the cassette of **FIG. 10** with the cassette cover open showing a mounting area at a first mounting side of a mounting base in the rear section;
**FIG. 13** is a top, perspective view of the cassette of **FIG. 10** with the cassette cover open showing a splice holder mounted in the mounting area at a first mounting side;
**FIG. 14** is a top, perspective view of the cassette of **FIG. 10** with the cassette cover open showing a CWDM module mounted in the mounting area at a first mounting side;
**FIG. 15** is a top, perspective view of the cassette of **FIG. 10** with the cassette cover open showing a mult-ifiber adapter and connector mounted in the mounting area at a first mounting side;
**FIG. 16** is a bottom, plan view of the cassette of **FIG. 10** showing a buffer tube slack storage mounted on the second side of the mounting base in the rear section;
**FIG. 17** is a bottom, perspective view of the cassette of **FIG. 10** showing the buffer tube slack storage of **FIG. 13****;**
**FIG. 18A** is a front, perspective view of the rail guide mounted in the movable chassis;
**FIG. 18B** is a rear, perspective view of the rail guide of **FIG. 18A****;**
**FIG. 19** is a block diagram illustrating an exemplary embodiment of optical fiber routing and connections between a enclosure splice tray, a feeder cassette, a distribution cassette, a splitter module, and connection holders in the fiber optic terminal;
**FIG. 20** is a block diagram illustrating an exemplary embodiment of optical fiber routing and connections in the fiber optic terminal configured as a cross-connect;
**FIG. 21** is an exploded, perspective view of an exemplary embodiment of a strand attachment assembly for suspending the fiber optic terminal from a strand in the aerial environment;
**FIG. 22** is a partial, detail, perspective view of the base illustrating ports and strain relief devices and a grounding assembly in the fiber optic terminal;

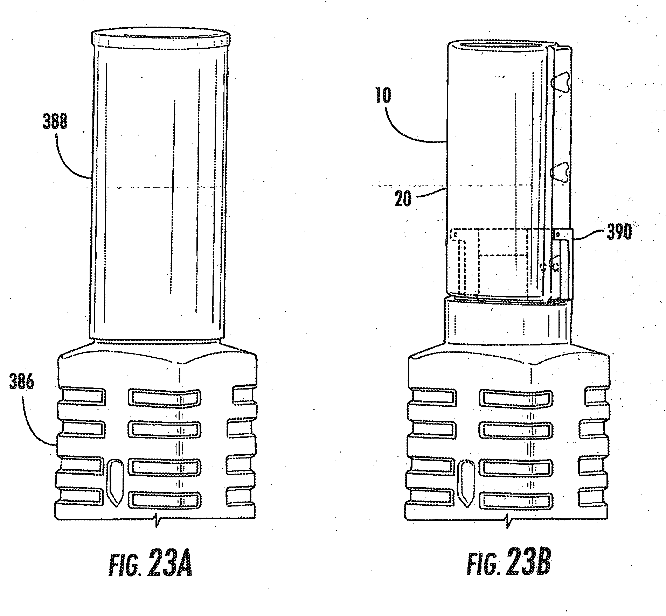

**FIG. 23A and 23B** are front, elevation views of the fiber optic terminal of FIG. 1. mounted on a pedestal with a pedestal cover installed and with the pedestal cover removed and illustrating a pedestal mounting bracket;
**FIG. 24A** is a front, elevation view of the fiber optic terminal oaf **FIG. 1** mounted on a "dog-house" style support using an inclinable frame;
**FIG. 24B** is a top, perspective view of the fiber optic terminal mounted on the "dog-house" style support in **FIG. 24A** with the inclinable frame adjusted to incline the fiber optic terminal at an angle to facilitate access to the fiber optic terminal;
**FIG. 25** is a front, elevation view of the fiber optic terminal of **FIG. 1** mounted on a "dog-house" style support using the hanger attachment assembly to suspend the fiber optic terminal from a suspended bar frame;
**FIG. 26** is a top, perspective view of the fiber optic terminal of **FIG. 1** mounted on a rack;
**FIG. 27** is a top, perspective view of the fiber optic terminal of **FIG. 1** mounted on a wall;
**FIG. 28** is a top, perspective view of the fiber optic terminal of **FIG. 1** mounted on a pole;

### DETAILED DESCRIPTION

Reference will now be made in detail to the embodiments, examples of which are illustrated in the accompanying drawings, in which some, but not all embodiments are shown. Indeed, the concepts may be embodied in many different forms and should not be construed as limiting herein; rather, these embodiments are provided so that this disclosure will satisfy applicable legal requirements. Whenever possible, like reference numbers will be used to refer to like components or parts.

Embodiments disclosed in the detailed description include a fiber optic terminal, which may also be referred to as a local convergence point (LCP), a fiber distribution hub (FDH), a fiber distribution terminal (FDT), or the like, that is a highly versatile package with easy access to optical fiber and optical components routed to and/or positioned in the fiber optic terminal for subscriber configuration. The optical components may include but not be limited to, splice trays, splice holders, optical signal power and wavelength managing components, including, without limitation, splitter modules, wave division multiplexers/demultiplexers (WDM), and the like, fiber optic connection modules, connector holder blocks, connector holders, fiber optic adapters and connectors, routing guides, and/or routing clips. Additionally, the term "splitter module" as used herein should be under stood to include any form of optical power splitting, coupling, or wavelength managing device, including without limitation, a passive optical splitter, fused biconic taper coupler (FBT) wave length division multiplexer/demultiplexer (WDM), coarse wavelength division multiplexer/demultiplexer (CWDM), dense wave division multiplexer/demultiplexer (DWDM), and the like.

The fiber optic terminal may comprise a shell or other enclosure that defines an interior space and at least one cable entry port. The fiber optic terminal may be configured to receive through the at least one entry port at least one optical feeder cable comprising one or more optical fibers.. The term "feeder cable" as used herein should be understood to include, without limitation, a transport cable, a back haul cable, and the like. Also, the fiber optic terminal may be configured to receive through another one of the at least one entry port at least one optical distribution cable comprising one or more optical fibers. The term "distribution cable" as used herein should be understood to include, without limitation, a branch cable, a drop cable, and the like. An optical connection may be established between the one or more optical fibers in the feeder cable and the one or more optical fibers in the distribution cable through at least one connection module. The terms "connection module" and "cassette" may be used interchangeably, and as used herein should be understood to include any module, cassette, panel, or the like, used for interconnecting optical fibers,. Thus, an optical signal carried by the optical fiber in the feeder cable from a service provider' central office, switching station, head end, or the like, may also be carried by an optical fiber in the distribution cable and extended to a subscriber's premises. Additionally, the fiber optic terminal may be configured to establish an optical connection between one or more feeder cables and/or between one or more distribution cables through at least one fiber optic connection module. In this manner, optical connectivity may be established between the service provider and the subscriber in an FTTX fiber optic network employing different network architectures.

The splitter modules and connection modules positioned inside the enclosure may be variably configurable as desired. In this way, the fiber optic terminal may be configured to have a size and cost compatible with any size, design, or architecture of the fiber optic network. As a non-limiting example, the fiber optic terminal may be configured for a centralized splitting architecture in which a splitter module splits the optical signal on one of the optical fibers of the feeder cable into multiple optical signals for distribution on optical fibers of a distribution cable to subscriber premises. Alternatively or additionally, the fiber optic terminal may be configured for a distributed split architecture in which a splitter module splits the optical signal on one of the optical fibers of the feeder cable into multiple optical signals which are then transmitted to one or more other fiber optic terminals for additional splitting before distribution to subscriber premises. In this way, the fiber optic terminal may be initially configured for smaller subscriber premises groups, such as small housing developments and phases of developments, so that the subscriber premises in the development may be connected cost effectively. However, because the fiber optic terminal is modular, the fiber optic terminal may subsequently be re-configured for larger developments, and may be connected by including additional components in the housing. As another non-limiting example, the fiber optic terminal may be configured as one of multiple fiber optic terminals interconnected in a ring topology used to enable transmission of different wavelengths of the optical signal over a multiplexed distribution portion of the fiber optic network. A CWDM or DWDM may be used as an add/drop multiplexer to drop and add wavelengths at one or more of the fiber optic terminals in the ring topology. Additionally, and as yet another non-limiting example, the fiber optic terminal may be configured without splitter module function, and used as a cross-connect and/or interconnect device. Furthermore, any type of optical or electronic, active or passive component may be positioned in the interior space of the fiber optic terminal. In this manner, the fiber optic terminal may be configured exactly to the application, avoiding the cost of unneeded components and functionality.

Further, the fiber optic terminal is designed to be versatile such that it can be universally mounted in different environments without modification or re-design. In this regard, the fiber optic terminal may be mounted on a strand, a wall, a pole, a pedestal, a rack or in a "dog-house" to provide compatibility with service providers, including cable service providers, current mounting preferences. Additionally, the fiber optic terminal may be sealed to allow for below-ground installation. Other benefits of the fiber optic terminal being variably configurable and modular are that only a limited number of parts have to be stocked and the needed configuration may be performed in the field. Also, internal splice capability, especially in a sealed package, may be provided without the need for additional enclosures. Thus, the fiber optic terminal may obviate the need for an external enclosure to splice cable stubs, reducing costs.

The fiber optic terminal may be worked on at ground level and then placed on an aerial strand, or lifted from a pedestal/hand, hole and worked on nearby. When the work is completed the fiber optic terminal may be placed on the strand or pedestal/ hand hole. In this way, the fiber optic terminal may be worked on in the horizontal and vertical position. Thus, there may be no need to take the fiber optic terminal down or move it, except to lift it from a hand hole, to make routing connections, perform testing, etc.

The fiber optic terminal may be used outside or indoors, for example, in a multiple dwelling unit (MDU) application. Feeder cable and distribution cable optical fibers may reside in the same cables in links to and between fiber optic terminals, saving on installation costs. These may be managed separately in the interior space of the fiber optic terminal by keeping feeder and distribution fibers in separate buffer tubes or ribbons. The fiber optic terminal may provide for grounding and bonding of armored cables and those with metallic elements. The grounding may be simple common grounding or one that provides for toning of the metallic elements being grounded. The fiber optic terminal provides capacity and versatility in a small form factor and in the manner in which it can be mounted accessed and connected.

The fiber optic terminal may be manufactured from any type of material, including, but not limited to, plastic and/or metal. Additionally, the fiber optic terminal may comprise an enclosure having at least two sections that define and/or allow the enclosure to define an interior space. The sections may be a base and a cover hingedly connected so that the enclosure may be opened or closed by rotating one or more of the base and the cover to allow access to the interior space. When closed the base and the cover may meet. The enclosure may then be sealed against the environment by appropriate latching mechanisms and/or sealing material. Additionally, an extension or lip may be formed on the enclosure. The extension and/or lip may be hingedly attached to the section and extend at least a portion of the length of the enclosure. When enclosure is closed, the extension or lip may extend over the interface between the base and cover for rain and/or water tight protection of the enclosure.

The fiber optic terminal may have other features and attributes, including but not limited to, a separate enclosure splice tray, which may allow for concatenating multiple fiber optic terminals together by splicing another feeder cable section to excess fibers of the feeder cable. In this way, multiple fiber optic terminals may be concatenated or series connected to cover a wider serving area with the smaller aesthetic foot print or form factor. The fiber optic terminal may be configured to accept stubbed and non-stubbed, internally spliced and preconnectorized cables and is able to accommodate different cable entries in the same fiber optic terminal. The feeder cable and the distribution cable may enter the fiber optic terminal from one side in a butt configuration or from both sides. Thus, the entry ports of the fiber optic terminal may have hubs and/or grommets allowing the feeder cables and/or the distribution cables to enter directly into the fiber optic terminal. Alternatively or additionally, the entry ports may have fiber optic adapters seated therein to provide for the fiber optic cables to optically connect at the enclosure with optical fibers routed within the fiber optic terminals. Thus, the feeder cables and/or distribution cables may enter the enclosure of the fiber optic terminal as raw cables or interconnect with the fiber optic terminal as connectorized/preconnectorized cable. In this manner, the fiber optic terminal may accept field-installed connectors or pre-connectorized connectors, such as the MTP, OptiTap™ and OptiTip™ fiber optic connectors as from Coming Cable Systems LLC of Hickory, N.C. to name just a few.

The terms "fiber optic cables" and/or "optical fibers" include all types of single mode and multi-mode light waveguides, including one or more optical fibers that may be upcoated, colored, buffered, ribbonized and/or have other organizing or protective structure in a cable such as one or more tubes, strength members, jackets or the like. Likewise, other types of suitable optical fibers include bend-insensitive optical fibers, or any other expedient of a medium for transmitting light signals. An example of a bend-insensitive optical fiber is ClearCurve^{®} Multimode fiber commercially available from Corning Incorporated.

A movable chassis adapted to hold one or more splitter modules, cassettes and/or a parking area may be positioned within the fiber optic terminal. The movable chassis provides an internal interior space that nests within the interior space of the enclosure. The splitter module may be movably positioned in splitter module holder, which may then be movably positioned in the movable chassis. Splitter legs output from the splitter module may be parked in a connector holder in the parking area until needed to connect a subscriber. When a subscriber is connected, an available splitter leg may be routed from the parking area storing any slack on routing guides. The splitter leg may be connected to a designated fiber optic adapter in one of the cassettes. The fiber optic adapter in the cassette may be configured to provide optical connection between connectors inserted in the adapter. Splitter legs may: be kept short to facilitate management and avoid entanglement.

The fiber optic terminal may be configured for any number of subscriber premises. This may be accomplished by the number and type of the splitter modules and the cassettes. The splitter modules may provide for equal splits or for unequal splits, and/or may be optical power or wavelength division multiplexer/demultiplexer type: For example, if the fiber optic terminal is to address 128 subscriber premises, then, four 1 x 32 splitter modules may be used. If the number of subscriber premises increases, then additional splitter modules may be added. Additionally, any other quantity or optical signal split multiple splitter modules may be used, including without limitation, 1 x 4, 1 x 8, and 1 x 16, or any other 1 x N optical signal split multiple. Additionally, other signal split multiples may be uses, for example, without limitation, a 2 x N splitter, which may be used to provide or redundant feeder optical signal. Further, the quantity and type of the cassette may be increased or decreased to address the specific optical network requirements. As example, the cassette may be a feeder cassette or a distribution cassette. The feeder cassette and distribution cassette may use a single platform or frame to allow for interchangeability. Also, the feeder cassette and distribution cassette may be variably configurable by inserting one or more components for the intended function, such as for splicing or multi-fiber connection, as examples. Thus, the feeder cassettes and distribution cassettes may function as both a connector panel and as a splice tray. The movable chassis may be configured to allow for pass-though optical fibers and other inefficiencies in areas that may not have uniformly grouped subscriber premises.

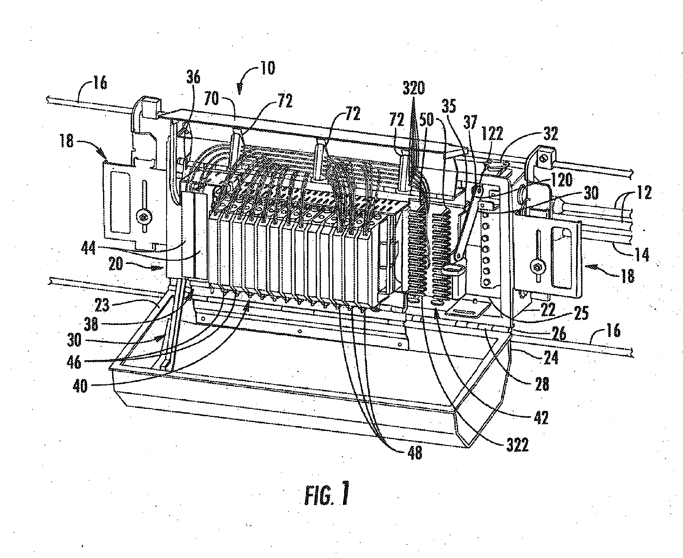

In this regard, **FIG. 1** illustrates a fiber optic terminal **10** according to one embodiment of the disclosure. The fiber optic terminal **10** provides a convenient access and local convergence point in a telecommunications or data network for a field technician to install, configure and reconfigure optical fiber connections between feeder cables and distribution cables. The fiber optic terminal **10** is configured to allow one or more optical fibers provided in one or more feeder cables **12** to be easily and readily interconnected with one or more optical fibers in one or more distribution cables **14.** The feeder cables **12** may also be referred to as "upstream" or "network-side" cables. The distribution cables **14** may also be referred to as "downstream" or "subscriber-side" cables. By the terms "upstream" or "network-side" it is meant that the optical fiber, fiber optic cable, or optical connection, as the case may be, arc provided between a central switching point, central office, head end or the like and the fiber optic terminal **10.** By the terms "downstream" or "subscriber-side," it is meant that optical fiber, fiber optic cable, or optical connection, as the case may be, are provided between the end subscriber and the fiber optic terminal **10.**

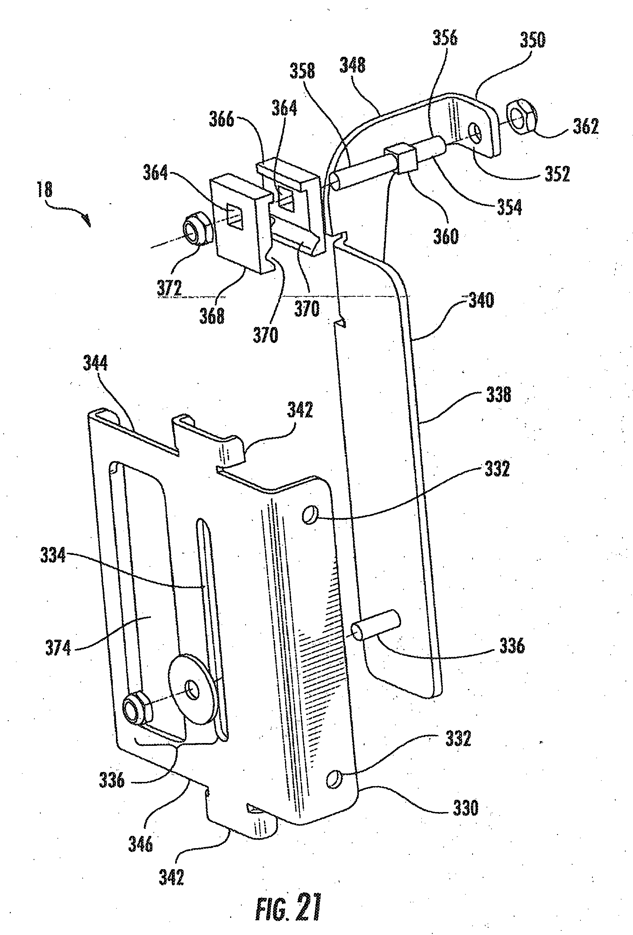

In the embodiment shown in **FIG. 1** the fiber optic terminal **10** is depicted in an aerial installation, but the fiber optic terminal **10** may be installed in other installation environments, as will be further discussed herein. In the aerial installation illustrated in **FIG. 1****,** the fiber optic terminal is suspended from a strand **16.** The strand may be one strung between two supports, such as, for example, utility poles (not shown), to provide an elevated, out-of-the-way and secured installation for the fiber optic terminal **10,** but one still easily accessible by a field technician or other authorized personnel. In such a case, the fiber optic terminal **10** may be suspended from the strand **16** by an attachment assembly in the form of a hanger bracket assembly **18.** Two hanger bracket assemblies **18** may be included with one each of the hanger bracket assemblies **18** located at either side of the fiber optic terminal **10.** The hanger bracket assemblies **18** allow the fiber optic terminal **10** to be adjustably mounted in a suspended orientation to a strand or other overhead support (See **FIG. 21**). As will be discussed herein, other attachment assemblies may be used to mount the fiber optic terminal in other installation environments. Another strand **16** is shown in **FIG. 1** below the fiber optic terminal **10.** Typically, strands **16** may be strung with approximately 30,48 cm (**12** inches) separating each stand. In the embodiment shown in **FIG. 1****,** the fiber optic terminal **10** is constructed to fit between the two strands **16.**

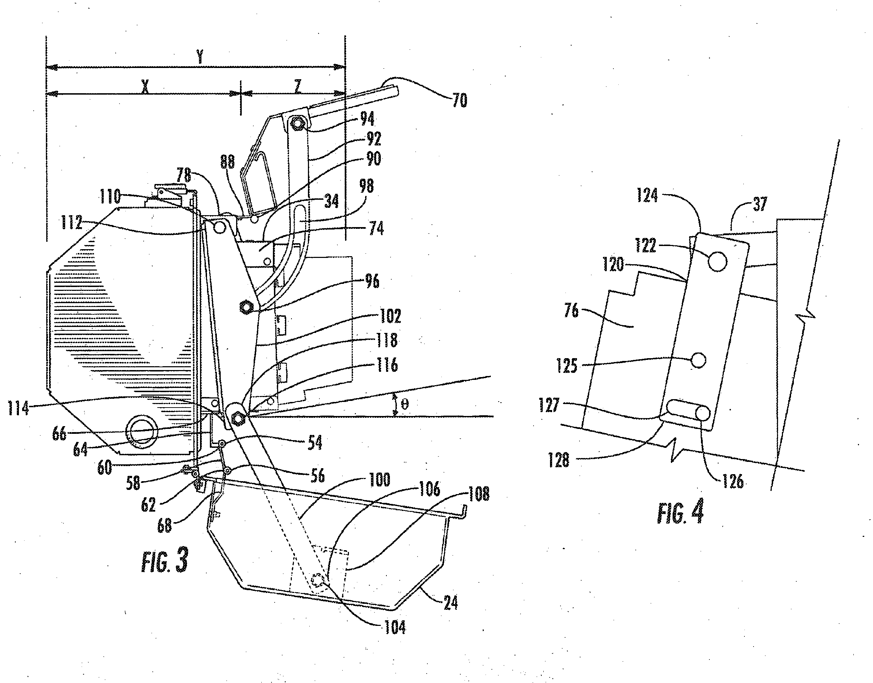

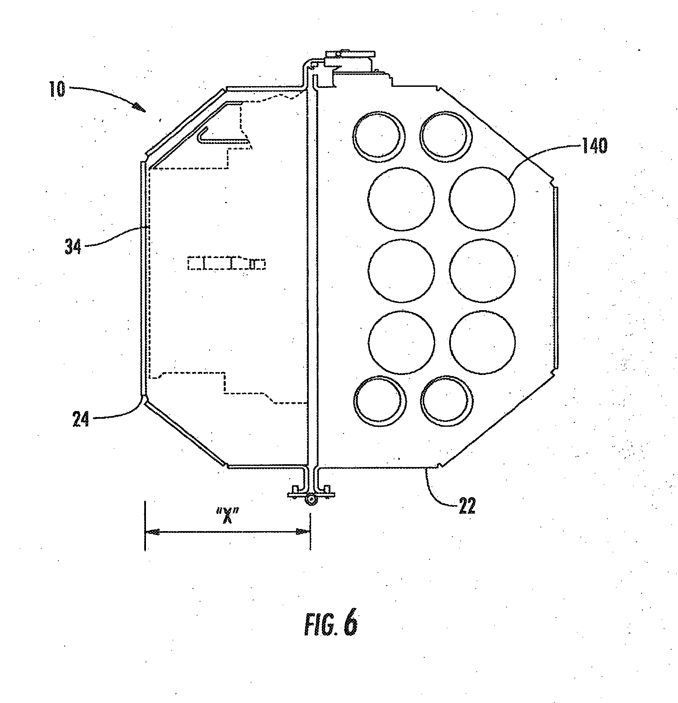

The fiber optic terminal illustrated in **FIG. 1** comprises an enclosure **20** having a base **22** and a cover **24** hingedly affixed to the base **22** and opened thereon and defining an interior space **25.** The base **22** and the cover **24** may be made of a rigid material, such as aluminum, or other metal, plastic; or thermoplastic, as examples. The base **22** and the cover **24** serve to close off and protect the internal components of the fiber optic terminal **10** when the cover **24** is closed on the base **22,** as illustrated in **FIG. 6****.** With reference to **FIG. 1****,** the enclosure **20** in this embodiment is a generally elongated rectangular small form factor structure. The enclosure **20** may be equivalent in size to a splice closure, but have easy ingress and egress similar to larger cabinets. In one embodiment, the enclosure **20** may have an overall length of about 55,88 cm (22 inches), an overall width of about 24,13 cm (9.5 inches), and an overall height of about 25,4 cm (10 inches). The fiber optic terminal **10** may be mounted on standard aerial strand and pedestal installations. However, other sizes and shapes are possible. The cover **24** may be hingedly affixed to the base **22** along a lower edge **26** by cover hinge **28.** In this manner, the cover **24** can be rotated about the cover hinge **28** when the cover **24** is opened from the base **22.** To limit the amount of opening of the terminal cover **24** from the base **22,** a connection assembly **30** may be attached between the cover **24** and the base **22** (see **FIGS. 3 and 4**). The connection assembly **30** may be provided in the form of one or more brackets having a defined geometry, length and interconnection design to limit the opening of the cover **24** and provide other functions as further discussed herein. A gasket **23** or other type of weather/environmental seal may be placed on an interface or edge of the enclosure **20** at which the base **22** and the cover **24** meet when closed. In this way, the fiber optic terminal **10** may be used in outdoor and buried applications. Additionally, when the cover **24** is closed on to the base **22,** the cover **24** may be secured to the base **22** by one or more fasteners **32,** which in **FIG. 1** are shown in the form of draw latches. Any other type or form of fastener may be used including for example bolts, screws, or the like.

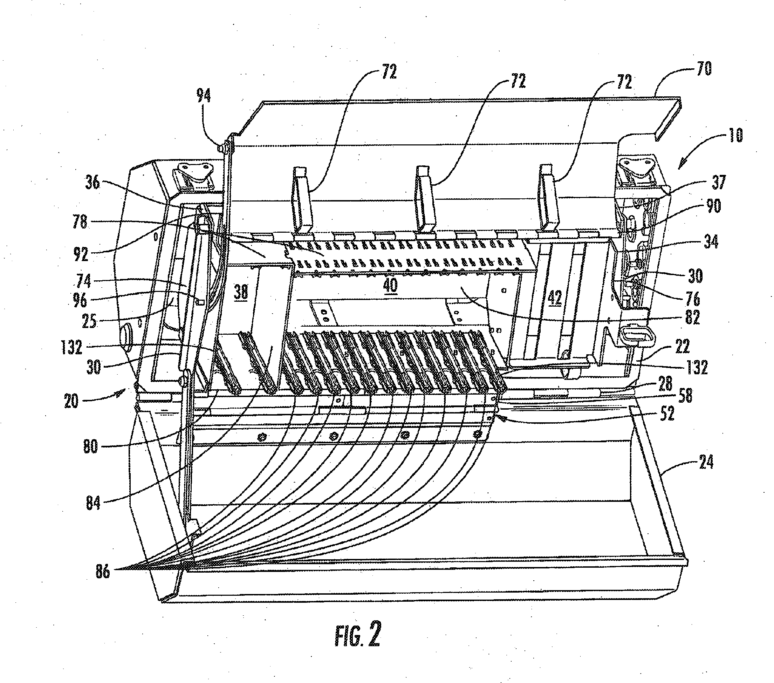

Continuing with reference to **FIG. 1** and also to **FIGS. 2** **and** **3****,** a movable chassis **34** positions in the interior space **25** of the fiber optic terminal **10** and attaches to the enclosure via enclosure brackets **36,37** and the connection assembly **30.** The movable chassis **34** may align with the interior space **25** in such a way as to be "nested" within the interior space **25,** thereby providing an internal space in the interior space **25.** The movable chassis **34** comprises a splitter holder area **38,** a cassette area **40** and a parking area **42.** This allows the movable chassis **34** to be able to support one or more splitter module holders **44,** movably positioned in the splitter holder area **38,** and one or more feeder cassettes **46** and/or distribution cassettes **48,** movably positioned in the cassette area **40.** Connector holder blocks **50** having connector holders **322** for receiving the connectorized splitter legs **320** may position in the parking area **42.**

A double hinge assembly **52** attaches between the movable chassis **34** and the cover **24.** The double hinge assembly **52** includes a first chassis hinge **54** and a second chassis hinge **56** connected by a hinge plate **58.** The first chassis hinge **54** connects to the hinge plate **58** at a first plate edge **60,** while the second chassis hinge **56** connects to the hinge plate **58** at a second plate edge **62,** opposite the first plate edge **60.** A bottom hinge mount **64** extends from the chassis bottom **66** and attaches to the double hinge assembly **52** at the first chassis hinge **54.** Thus, the first chassis hinge **54** hingedly connects the hinge plate **58** to the bottom hinge mount **64** and, thereby, to the movable chassis **34**. A cover hinge bracket **68** attaches to the cover **24.** The second chassis hinge **56** hingedly connects the hinge plate **58** to the cover hinge bracket **68,** and, thereby, to the cover **24.**

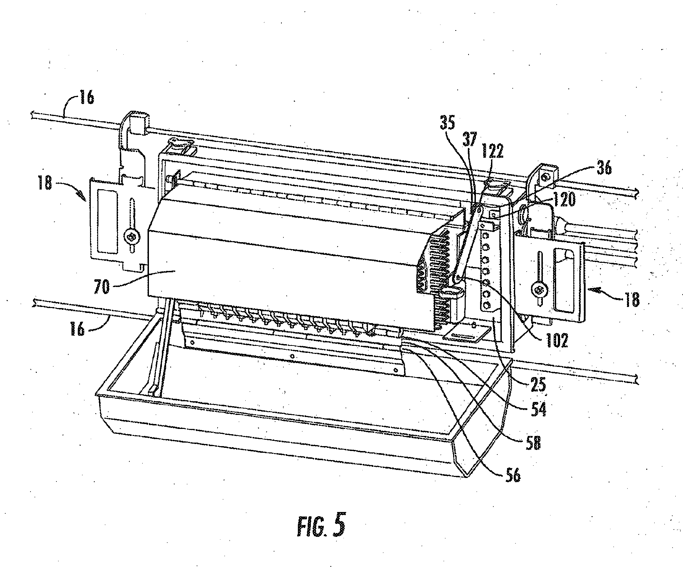

Additionally, a protective shield **70** may be hingedly attached to the movable chassis **34.** The protective shield **70** pivots or rotates between a covered position and a raised position. In **FIGS. 1****,** **2****, and** **3****,** the protective shield **70** is shown in the raised or opened position, and in **FIG. 5****,** the protective shield **70** is shown in the covered or lowered position. In the raised position, the protective shield **70** allows for access to the splitter module holders **44,** the feeder cassettes **46,** the distribution cassettes **48** and the connector holder blocks **50.** Routing clips **72** may be attached to the inside of the protective shield **70.** The routing clips **72** route, organize and maintain the optical fibers routed to and between the splitter module holders. **44,** the feeder cassettes **46,** the distribution cassettes **48** and the connector holder blocks **50.** Additionally, when the protective shield **70** is in the raised position, the routing clips **72** automatically move the routed optical fibers away from the splitter module holders **44,** the feeder cassettes **46,** the distribution cassettes **48** and the connector holder blocks **50.** In this way, the routed optical fibers remain accessible but are not in the way if a field technician desires to access one or more of the splitter module holders **44,** the feeder cassettes **46,** the distribution cassettes **48** and the connector holder blocks **50** for configuring or re-configuring the fiber optic terminal **10.** Such configuring or re-configuring may include inserting, removing and/or re-positioning one or more of the splitter module holders **44,** the feeder cassettes **46,** the distribution cassettes **48** and the connector holder blocks **50.** Such configuring or re-configuring may also include routing, connecting or changing the routing or connection of one or more optical fibers. In either such case, the field technician may easily access the optical fibers as may be necessary for such configuring and/or re-configuring.

In **FIG. 5****,** the protective shield **70** is shown in the covered position. In the covered position the protective shield **70** provides protection against any inadvertent physical contact with the splitter module holders **44,** the feeder cassettes **46,** the distribution cassettes **48** and the connector holder blocks **50** when the fiber optic terminal **10** is open. Additionally, in the covered position the protective shield **70** secures and protects the optical fibers from, for example, getting pinched or caught between the base **22** and the cover **24,** or any other structure or component, especially when the fiber optic terminal **10** is opened or closed. Further, when the fiber optic terminal **10** is closed, the protective shield **70** is in the covered position. In this way, the protective shield **70** provides additional environmental protection to components mounted within the enclosure **20** when the fiber optic terminal **10** is closed.

Referring now to **FIG. 2****,** the movable chassis **34** comprises a first chassis side **74,** a second chassis side **76**, a chassis top **78, a** chassis bottom **80** and a chassis back **82.** The movable chassis **34** has an open front **84** opposite the chassis back **82.** The chassis bottom **80** in the cassette area **40** is formed with a series of fingers **86** extending from the chassis back **82** to the open front **84.** A top hinge mount **88** extends from the chassis top **78** and attaches the chassis top **78** to a shield hinge **90.** The shield hinge **90** allows the protective shield **70** to rotate between a covered position and a raised position using a guide bracket **92.** The guide bracket **92** is rotatably fixed to the protective shield **70** by a shield pin **94.** A first chassis pin **96** attached to the first chassis side **74** inserts into a guide slot **98** cut in the guide bracket **92.** In this manner, as the protective shield **70** rotates between the covered position and the raised position on the shield hinge **90,** the guide bracket **92** is allowed to move as the protective shield **70** moves. This is due to the guide slot **98** moving along the first chassis pin **96.** Any pin described herein, including, without limitation, the shield pin **94** and the first chassis pin **96** may be any type or form of pin or protrusion, including, without limitation, a bare projection or a projection with some type of friction material to control the speed of movement or rotation, and/or a nut, washer and bolt combination that allows for movement and/or rotation.

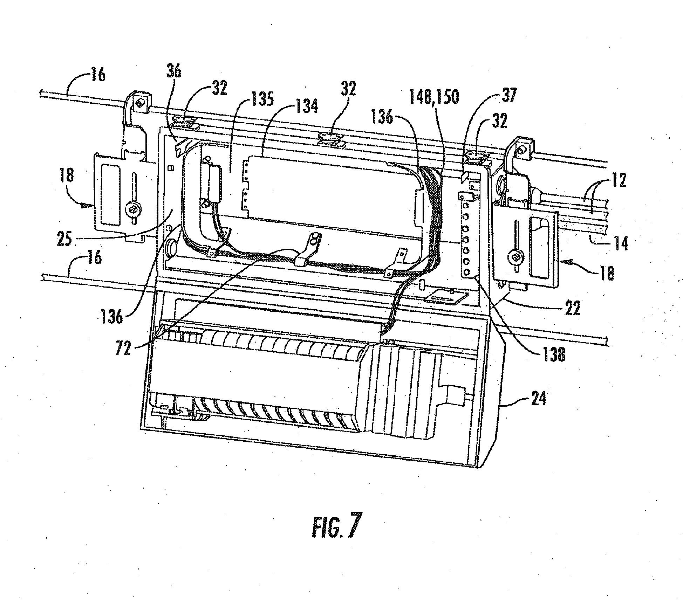

The use of the double hinged assembly **52** with the connection assembly **30** allows the movable chassis **34** to locate in multiple positions with respect to the base **22** and the cover **24**. The multiple positions include an extended position shown in **FIG. 1****,** **FIG. 3** and **FIG. 4****,** a base position, shown in **FIG. 6**, and a cover position, shown in **FIG. 7****.** As shown in **FIG. 6****,** when the fiber optic terminal **10** is closed, the movable chassis **34** is in the base position. However, as shown in **FIG. 3****,** when the cover **24** is opened, the movable chassis **34** automatically extends out from the base **22** an additional distance. Additionally, as the movable chassis **34** extends out, it tilts upwardly, or away from the cover **24.**

The movable chassis **34** is able to position in the extended position through the action of the double hinge assembly **52** and the connection assembly **30.** The connection assembly **30** includes a cover connection bracket **100** movably attached to the cover **24,** and a first chassis connection bracket **102** movably attached to the enclosure **20** and, also, the movable chassis **34** at the first chassis side **74.** The first cover connection bracket **102** may be a double bracket structure that attaches to the cover **24** at cover bracket mount **108** by a cover pin **104** inserted through a hole in the cover bracket mount **108** and holes in a first end **106** of the cover connection bracket **100.** This allows the first end **106** of the cover connection bracket **100** to rotate about the cover pin **104.** The first chassis connection bracket **102** attaches to the first enclosure bracket **36** by a first spring plunger **110** inserted through a hole in the first end **112** of the first chassis connection bracket **102**. This allows the first end **112** of the first chassis connection bracket **102** to rotate about the first spring plunger **110.** The first chassis connection bracket **102** also attaches to the movable chassis **34** by a first chassis pin **96** protruding from the movable chassis **34.** The first chassis pin **96** inserts through a hole located between the first end **112** and a second end **114** of the first chassis connection bracket **102.** The cover connection bracket **100** and the first chassis connection bracket **102** may be connected by a link pin **116** inserted through linkage holes in the second end **118** of the cover connection bracket **100** and the second end **114** of the first chassis connection bracket **102.**

With the cover **24** closed, a portion of the movable chassis **34** positions within the base **22.** Thus, a portion of the movable chassis **34** toward the open front **84** may extend out a certain distance **"x"** from the lower edge **26** as shown in **FIG. 6****.** The portion of the movable chassis **34** that extends out may include portions of the chassis top **78,** the first chassis side **74,** the second chassis side **76,** and the chassis bottom **80,** along with a portion of any splitter module holders **44,** feeder cassettes **46,** distribution cassettes **48** positioned within the movable chassis **34.** The distance designated as **"x"** in **FIG. 3** and **FIG. 6** may be any length. For example **"x"** may be approximately 3.8 inches. When the cover **24** is opened, the cover connection bracket **100** pulls on the first chassis connection bracket **102 at** the link pin **116** causing the first chassis connection bracket **102** to rotate around the first spring plunger **110.** The rotation the first chassis connection bracket **102** about the first spring plunger **110** pushes on the first chassis pin **96** forcing the movable chassis **34** to move away from the base **22** and tilt up away the cover **24.** This causes the movable chassis **34** to extend out from the enclosure to a distance measured from the back of the enclosure **20** designated as **"y"** in **FIG. 3****.** The distance **"y"** may be any length. For example, **"y"** may be approximately 15,49 cm 6.1 inches. The difference between **"x"** and **"y"** is designated as "**z**" in **FIG. 3A****,** and is the additional distance the movable chassis **34** extends from the base **22** when the cover **24** is opened. Using the examples above, that distance may be approximately 5,84 cm 2.3 inches calculated by 15,49 cm (y) - 9,65 cm (x) = 5,84 cm (z) (6.1 inches (y) - 3.8 inches (x) = 2.3 inches (z)). Additionally, the rotation of the first chassis connection bracket **102** about the first spring plunger **110,** and the first chassis pin **130** causes the open front **84** of the movable chassis **34** t**o** pivot or tilt away from the cover **24.** In **FIG. 3****, the** movable chassis **34** is shown tilted at an angle 0 measured from an axis normal to the enclosure back **106.** The angle 0 may be any degree. For example, the angle 0 may be approximately 5.3 degrees.

Also, when the fiber optic terminal **10** is closed the hinge plate **58** may be aligned generally parallel with the chassis bottom **80.** As the fiber optic terminal **10** is opened, the hinge plate **58** may rotate around the first chassis hinge **54** and a second chassis hinge **56.** The hinge plate **58** may rotate until it is generally perpendicular with the chassis bottom **80** when the cover **24** is fully opened.

Additionally, as depicted in **FIG. 4****,** a second chassis connection bracket **120** attaches to the second enclosure bracket 37 at the second chassis side **76.** The second chassis connection bracket **120** attaches to the second enclosure bracket **37** by a second spring plunger **122** inserted through a hole in a first end **124** of the second chassis connection bracket **120.** This allows the first end **124** of the second chassis connection bracket **120** to rotate about the second spring plunger **122.** The second chassis connection bracket **120** also attaches to the movable chassis **34** by a second chassis pin **126** protruding from the movable chassis **34** through a slot **127** located at a second end **128** of the second chassis connection bracket **120.** Additionally, the second chassis connection bracket **120** attaches to a chassis pivot pin **125** located between the first end **124** and the second end **128.** As the cover **24** opens, the rotation the second chassis connection bracket **120** about the second spring plunger **122** pushes on the second chassis pin **126** forcing the movable chassis **34**

Referring again to **FIG. 1** **and** **FIG. 2**, the splitter module holders **44** movably position in the splitter area **38** through the open front **84** on rail guides **132** mounted as opposing pairs on the chassis top **78** and the chassis bottom **80.** In this way, the splitter module holders **44** may be inserted into the movable chassis **34,** removed from the movable chassis **34** or repositioned in the movable chassis **34.** Similarly, the feeder cassettes **46** and the distribution cassettes **48** movably position in the cassette area **40** on the rail guides **132** mounted on the chassis top **78** and the chassis bottom **80.** The rail guides **132** mounted on the chassis bottom **80** in the cassette area **40** each mount on one of the fingers **86.** The feeder cassettes and the distribution cassettes may position in the movable chassis **34** in an adjacent alignment. To provide for optical fiber routing efficiency, the feeder cassettes **46** may position adjacent to one another and the distribution cassettes **48** may position adjacent to one another. Because the feeder cassettes **46** and the distribution cassettes **48** movably position on the rail guides **132** in the movable chassis **34**, one or more of the feeder cassettes **46** and one or more of the distribution cassettes **48** may be inserted into the movable chassis **34**, removed from the movable chassis **34** or repositioned in the movable chassis **34.** Thus, each of the splitter module holders **44,** the feeder cassettes **46** and distribution cassettes **48** may be separately and independently inserted, removed and repositioned in the movable chassis **34** making the fiber optic terminal **10** modular and variably configurable.

When the movable chassis **34** positions in the extended position, the splitter module holders **44,** feeder cassettes **46,** distribution cassettes **48,** and the connector holder blocks **50** become more accessible to the field technician for initial configuration of the fiber optic terminal **10** at or after installation, and/or for subsequent reconfiguration of the fiber optic terminal **10.** Such configuration and/or reconfiguration may include the addition or removal of one or more splitter module holders **44,** feeder cassettes **46** or distribution cassettes **48,** as described above. Additionally, such configuration or reconfiguration may include the routing of an optical fiber **148, 150** from a feeder cable **12** or distribution cable **14** to different components mounted in the interior space **25** of the fiber optic terminal **10.** For example, such routing may include moving a splitter leg from the connector holder in the parking area **42** to the distribution cassette **48,** or vice-versa, and other configuration changes, to provide or discontinue service to a subscriber.

Referring now to **FIG. 7****,** the movable chassis **34** is shown positioned in the cover position when the fiber optic terminal **10** is open. To position the movable chassis **34** into the cover position, the first spring plunger **110** and the second spring plunger **122** are pulled out such that the first chassis connection bracket **102** disconnects from the first enclosure bracket **36** and the second chassis connection bracket **120** disconnects from the second enclosure bracket **37.** Thus, pulling on the first spring plunger **110** and the second spring plunger **122,** detaches the movable chassis **34** from the base **22.** Because the movable chassis **34** is detached from the base **22,** the movable chassis **34** may then be rotated about the double hinge assembly **52** from the extended position into the cover position. Positioning the movable chassis **34** in the cover position allows access to the inside of the base **22** and the components mounted therein. As the movable chassis **34** rotates to position in the cover **24,** the hinge plate **58** may rotate around the first chassis hinge **54** and a second chassis hinge **56.** The hinge plate **58** may rotate until it is generally parallel with the chassis bottom **80** when the movable chassis **34** is in the cover position.

As shown in **FIG. 7****,** one or more enclosure splice trays **134** may mount in the interior space **25** in the base **22** in a fiber management area **135.** Additionally, the fiber management area **135** may include components that provide for the management of the optical fibers **148, 150** from the feeder cable **12** and the distribution cable **14,** respectively. To facilitate optical fiber management, two routing guides **136** may extend from the interior space **25** in the base **22.** In addition, one or more routing clips **72** mount in the base **22.** Another component mounted in the base, may be a grounding assembly **138**, which is shown attached to a side of the base **22.** The feeder cable **12** and the distribution cable **14** enter the fiber optic terminal **10** through entry ports **140** in the enclosure **20.** In **FIG. 6****,** the entry ports **140** are shown located in a first wall **142** and a second wall **144** of the base **22,** but the ports **140** may be located at any position on the enclosure **20.**

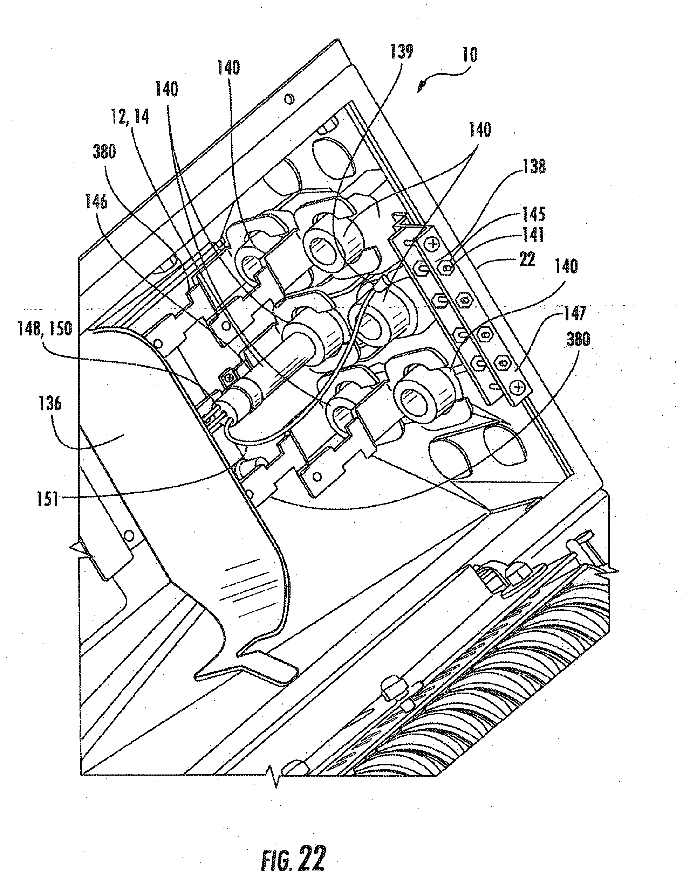

The entry ports **140** may be a pass-through type port, with a standard hub and/or grommet function. Alternatively, one or more of the entry ports **140** may have a fiber optic adapter seated therein. The fiber optic adapter may be configured to receive a single optical fiber connector or multiple otical fiber connectors, including, without limitation, as examples SC, LC, MTP, OptiTap® or OptiTip™ adapters commercialized by Coming Cable Systems LLC, Hickory, NC. Once inside the enclosure **20,** the jacket **146** on the feeder cable **12** and the distribution cable **14** is removed to allow the optical fibers **148, 150** to separately route inside the enclosure. Strain relief devices as shown in **FIG. 22** may also be provided. **FIG. 6** illustrates the routing of the optical fibers.**148, 150** in the base. The optical fibers **148, 150** route around the cable guides **136** and through the cable clips 72. In this manner, the routing guides **132** and the routing clips **72** manage the routing of the optical fibers **148, 150** and accommodate any slack to provide an organized installation. This allows the field technician to effectively and easily accommodate varying lengths of the optical fibers **148, 150** and identify the particular optical fibers **148, 150.** One or more of the optical fibers **148** of one section of the feeder cable **12** may route to the enclosure splice tray **134** where they are spliced to one or more of the optical fibers **148** of another section of the feeder distribution cable **12.** In this way, multiple fiber optic terminals **10** may be concatenated or series connected.

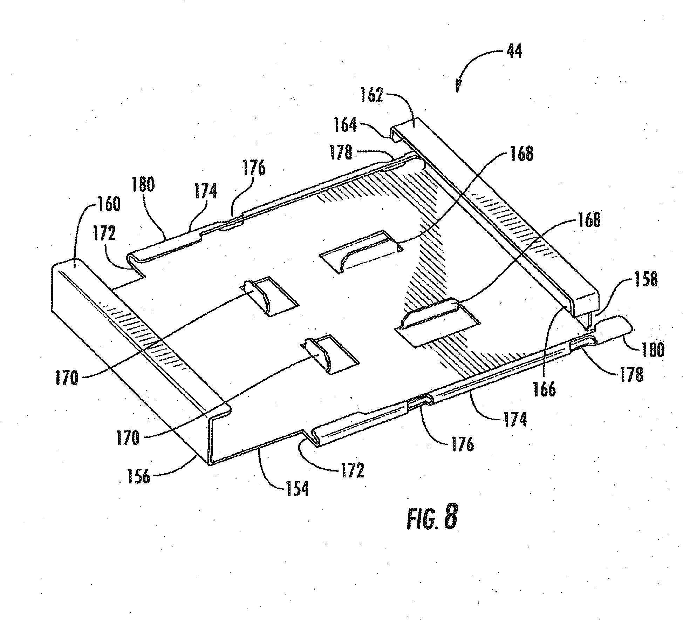

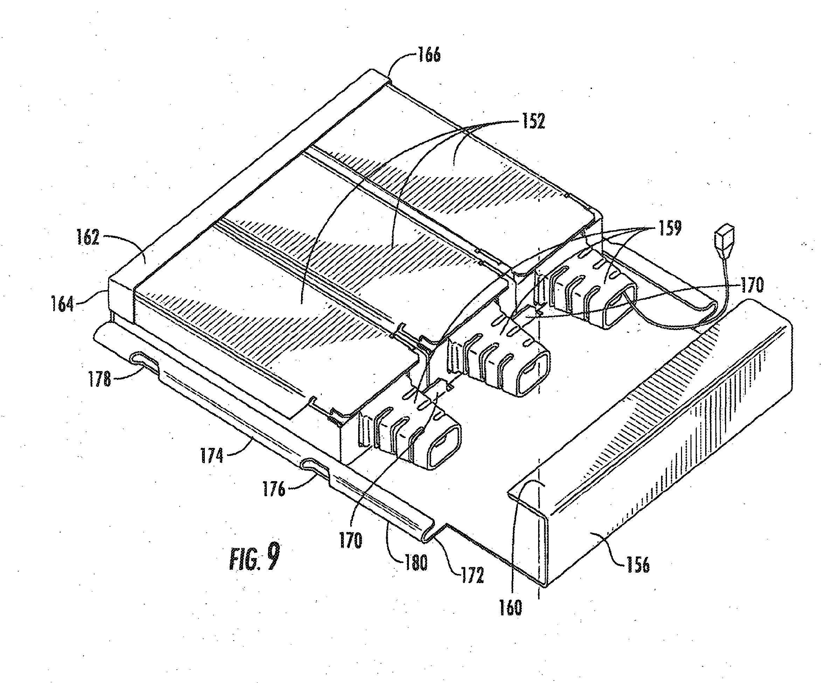

Referring now to **FIGS. 8** and **9****,** the structure of the splitter module holder **44** and the mounting of the splitter modules **152** will be discussed. The splitter module holder **44** without splitter modules **152** mounted therein is illustrated in the **FIG. 8** and the splitter module holder **44** with splitter modules **152** is illustrated in **FIG. 9****.** The splitter module holder **44** comprises a splitter platform **154** with a front side **156** and a back side **158** extending generally perpendicular therefrom. A front edge **160** bends or extends back towards the back side **158.** Forming the front side **156** in this manner facilitates several functions. Such functions may include inserting the splitter module holder **44** into the splitter area **38** in the movable chassis **34,** removing the splitter module holder **44** from the splitter module holder area **40** in the movable chassis **34,** and carrying the splitter module holder **44** when removed from the movable chassis **34.** Additionally, by forming the front side in this manner, the front side **156** may protect, organize and route the optical fiber input into the splitter module **152** and the splitter legs output from the splitter module **152.**

A back edge **162** bends or extends towards the front side **156.** A first end **164** and a second end **166** of the back edge **162** curve downwardly. In this way, the back of the splitter module **152** may fit under the back edge **162** and within the first end **164** and the second end **166** of the back side **158.** The back of the splitter module **152** may be for example, but without limitation, the end without a boot **159**. Side positioning tabs **168** and front positioning tabs **170** extend from the splitter platform **154.** The side positioning tabs **168** align the splitter modules **152** in a side-to-side configuration while the front positioning tabs **170** align the splitter modules **152** in a front-to-back configuration. This can be seen with reference to **FIG. 8****,** which illustrates three splitter modules **152** mounted in the splitter module holder **44,** in a three across alignment. The side positioning tabs **168** (hidden in **FIG**. **8**) align the splitter modules **152** in the three across alignment, and the front positioning tabs **170** align the back of the splitter modules **152** against the back side **158** and under the back edge **162** between the first end **164** and the second end **166.**

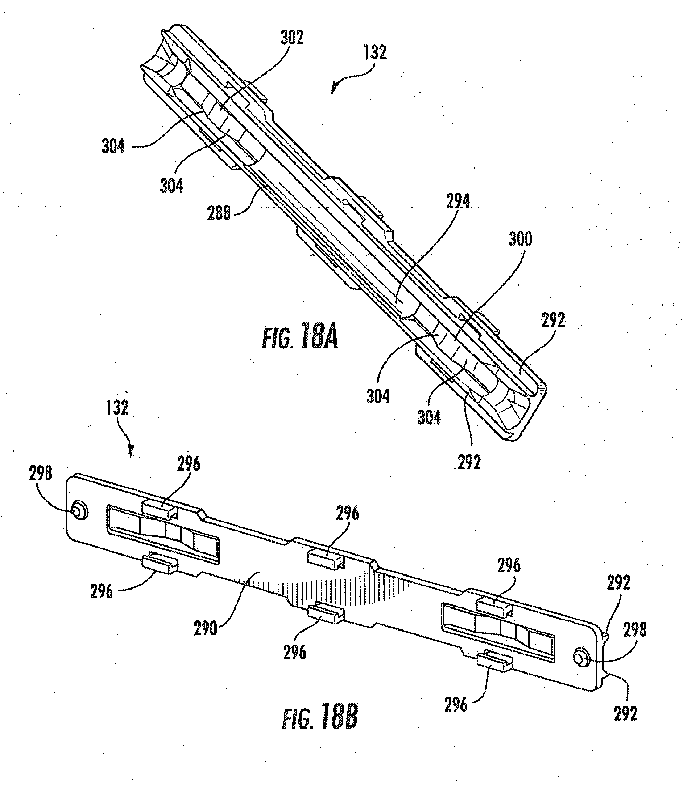

The splitter platform **154** has two sides **172** that extend out from the splitter platform **154** and curve back in to form holder rails **174.** Each holder rail **174** has a first holder detent **176** and second holder detent **178** extending through a curved portion **180** thereof. In this manner, when inserting the splitter module holder **44** into or removing the splitter module holder **44** from the movable chassis **34,** one of the holder rails **174** may engage with and slide in the rail guide **132** mounted in the chassis top **78** in the splitter holder area **38,** and the other of the holder rails **174** may engage with and slide in the rail guide **132** mounted in the chassis bottom **80** in the splitter holder area **38.** Both holder rails **174** are designed such that either may engage with and slide in the rail guides **132** in the chassis top **78** or the chassis bottom **80.** In either case, the splitter module holder **44** may be inserted in the splitter area **38** with the back side **158** first so that the front side **156** may be accessible from the open front **84** of the movable chassis **34** to provide access to the optical fiber input into the splitter module **152** and the splitter legs output from the splitter module **152.** As the splitter module holder **44** inserts into the movable chassis **34,** the first holder detent **176** and the second holder detent **178** engage protrusions formed in the rail guide **132** as will be discussed in more detail herein with respect to **FIGS. 18A** and **18B****.**

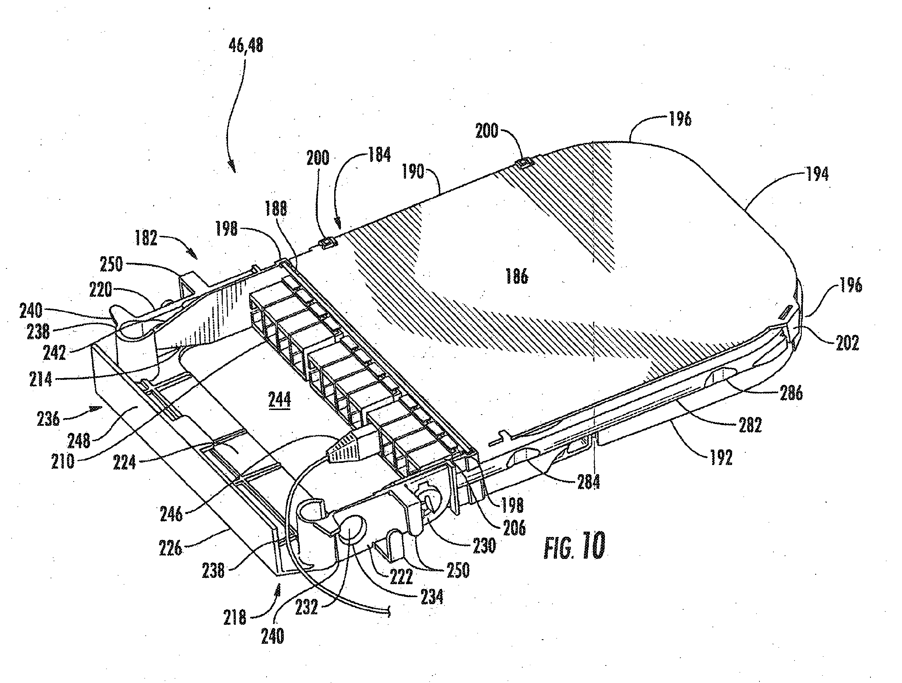

The feeder cassette **46** and the distribution cassette **48** are illustrated in **FIGS. 10-17****.** Since the feeder cassette **46** and the distribution cassette **48** have the same structure, and, therefore, may be interchangeable, when referring to the structure the term "cassette" will be used with both component numbers **46, 48.** It should be understood that cassette refers to either or both of the feeder cassette **46** and the distribution cassette **48.** However, the terms "feeder cassette" and the "distribution cassette" will be used when necessary in the discussion to distinguish between the two, for example when discussing different components mounted in each. The interchangeability of the cassettes allows for economy in stocking parts

Referring now to **FIG. 10****,** the cassette **46, 48** is illustrated having a front section **182** and a rear section **184.** The rear section **184** has a cassette cover **186**, a cassette front wall **188,** a first cassette side **190,** a second cassette side **192,** opposite the first cassette side **190**, and a cassette back wall **194**. In **FIG. 10****,** the cassette cover **186** is shown in the closed position over the rear section **184** of the cassette **46, 48.** The first cassette side **190** and the second cassette side **192** extend from the front section **182** to the cassette back wall **194,** and connect with the cassette back wall **194** in a curvilinear structure **196** without forming corners thereat. The cassette front **wall 188** attaches to the first cassette side **190** and the second cassette side **192** in side slots **198** formed in the first cassette side **190** and the second cassette side **192.** The cassette cover **186** positions on the rear section **184** and may have one or more hinge points **200** at the cassette front wall **188,** first cassette side **190,** the second cassette side **192** or the cassette back wall **194** to allow the cassette cover **186** to move between an open and a closed position. In the embodiment shown in **FIG. 10****,** the hinge points **200** are positioned on the first cassette side **190.** When the cassette cover **186** is closed, cover tabs **202** friction fit into tab notches **204** to releasably retain the cassette cover **186** in the closed position. Alternatively the cassette cover **186** may not be hinged but may be designed to lift completely off of the rear section **184.** In such event, cover tabs **202** may also be provided on one or more of the cassette front wall **188,** the first cassette side **190** and the second cassette **192** side to attach the cassette cover **186** to the rear section **184** by friction fitting the cover tabs **202** into the tab notches **204.** Also, alternatively, the cassette cover **186** may be slidably attached to the rear section **184.**

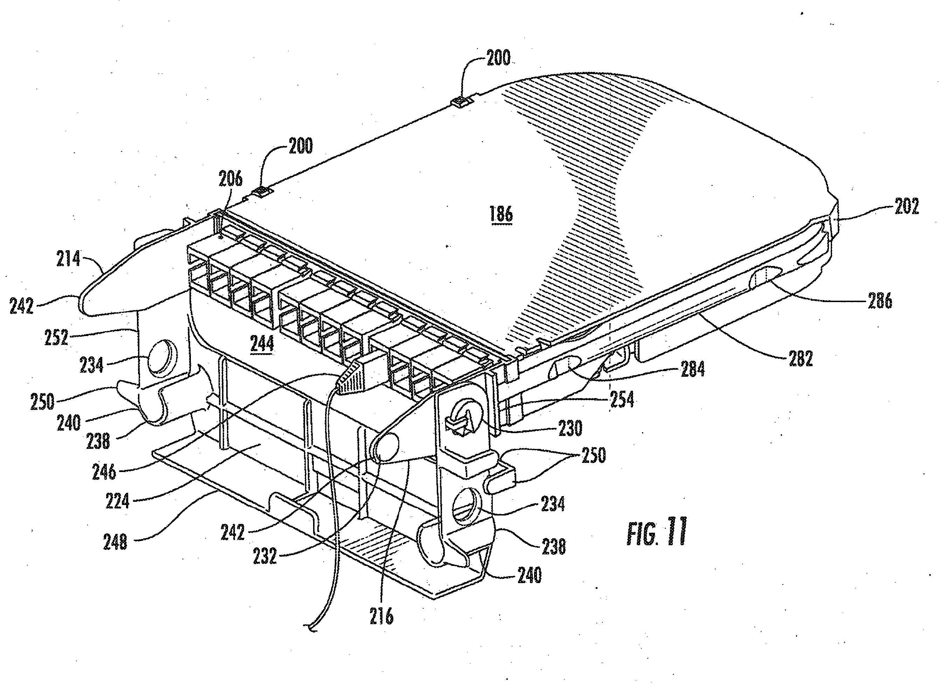

Fiber optic adapters **206** extend through apertures (hidden in **FIG. 10**) in the cassette front wall **188.** In this manner, a first end **210** of the fiber optic adapters **206** positions in and opens into the front section **182** and a second end **212** of the fiber optic adapters **206** positions in and opens into the rear section **184** as shown in **FIG. 11****.** The fiber optic adapters may be any type of adapter that accepts an optical fiber connector. For example, without limitation, such fiber optic adapters may be SC, LC, simplex and/or duplex fiber optic adapters. Additionally, although the cassette in **FIGS. 10 - 17** are shown with 12 fiber optic adapters, any number of fiber optic adapters may be used. A first cassette side extension **214** and a second cassette side extension **216** extend into the front section **182.**

The front section **182** comprises a frame assembly **218** having a first frame side **220,** a second frame side **222,** a plate **224,** and a frame front **226.** The first frame side **220** pivotally attaches to the first cassette side extension **214** at a first pivot pin **228** (hidden in **FIG.** 10). The second frame side **222** pivotally attaches to the second cassette side extension **216** at a second pivot pin **230.** Bumps **232** are formed on an outside of the first cassette side extension **214** and the second cassette side extension **216.** The bumps **232** engage respective retaining holes **234** in the first frame side **220** and the second frame side **222,** respectively. When engaged in the retaining holes **234,** the bumps **232** releasably retain the first frame side **220** and the second frame side **222** in a first frame position as illustrated in **FIG. 10****.**

An open cylindrical cable guide **238** is formed at distal ends **240** of the first frame **side 220** and second frame side **222.** The first cassette side extension **214** and the second cassette side extension **216** each have a tapered end **242.** When the frame assembly **218** is in the first frame position, the tapered end **242** of the first cassette side extension **214** locates in the open cylindrical cable guide **238** at the distal end **240** of the first frame side **220.** The tapered end **242** of the second cassette side extension **216** locates in the open cylindrical cable guide **238** at the distal end **240** of the of the second frame side **222** when the frame assembly is in the first frame position.

The plate **224** extends between the distal ends **240** of the first frame side **220** and the second frame side **222** and provides support for optical fibers routed to the cassette **46, 48.** The plate **224** is separated from the cassette front wall **188** by an access area **244,** such that the access area **244** is adjacent to the first end **210** of the fiber optic adapters **206.** The plate **224** may have stiffeners **236** formed therein to provide additional strength and stiffness. By being located adjacent to the first end **210** of the fiber optic adapters **206,** the access area **244** provides finger access to the fiber optic adapters **206** to facilitate the insertion and removal of fiber connectors **246** at the ends of optical fibers. The frame front **226** extends generally perpendicularly from a front edge **248** of the plate **224** and acts to retain the optical fibers routed to the cassette **46,48** on or at the plate **224.** Additionally, frame cable guides **250** are provided to maintain, organize and route the optical fibers.

Referring now to **FIG. 11****,** the frame assembly **218** is shown in the second frame position. Manual pressure applied to the frame front **226** releases the bumps **232** from the retaining holes **234** and allows the frame assembly **218** to pivot through an angle of up to about 90 degrees. Stops **254** extending from the first cassette side extension **214** and the second cassette side extension **216** restrict the frame assembly **218** from pivoting further. By pivoting the frame-assembly **218** to the second frame position, greater access may be provided to the first ends **210** of the fiber optic adapters **206** for initially installing, configuring and/or re-configuring the optical fibers to the cassette.

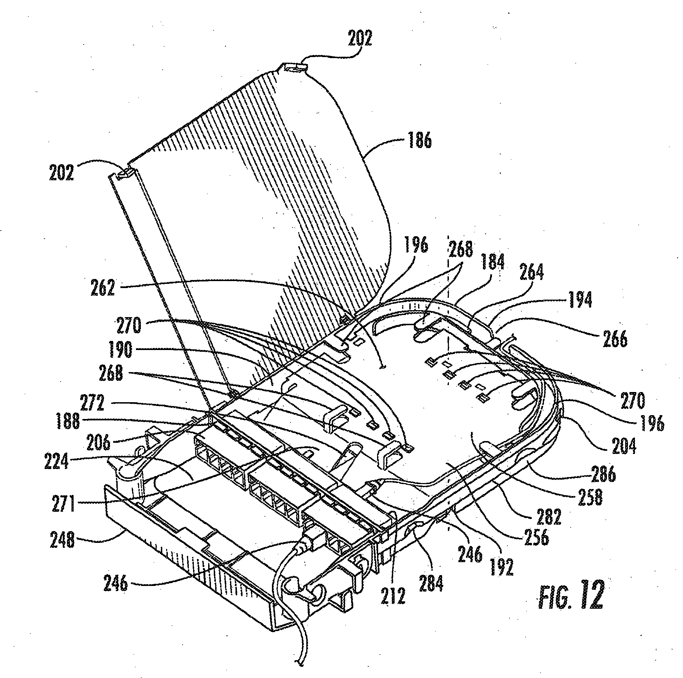

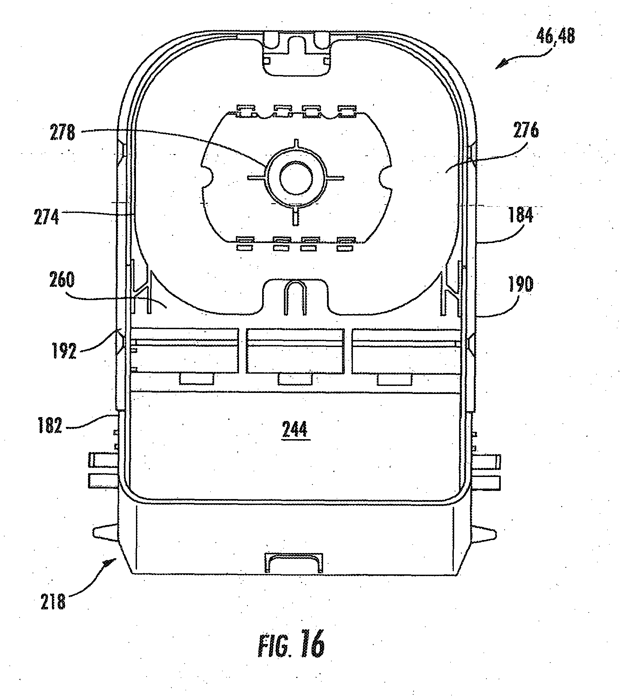

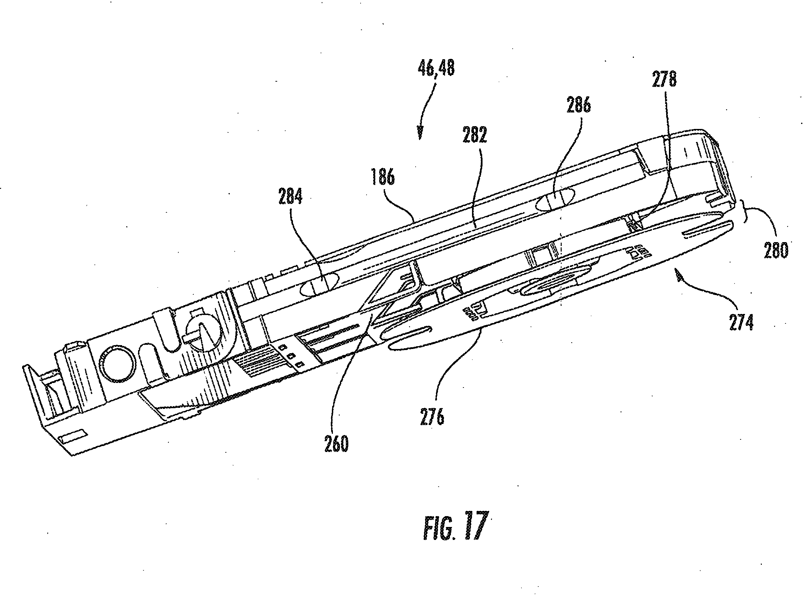

Referring now to **FIG. 12****,** the cassette is shown with the cassette cover **186** open exposing the inside of the rear section **184.** A generally flat planar mounting base **256** having a first mounting side **258** and a second mounting side **260** (see **FIGS. 16** **and** **17**) extends between and is bounded by the cassette front wall **188,** the cassette back wall **194,** the first cassette side **190**, and the second cassette side **192.** In this manner, a mounting area **262** may be defined for mounting optical components and for routing optical fibers to the optical components. A cassette routing guide **264** extends generally perpendicularly from the first mounting side **258** and runs along a line parallel to the cassette back wall **194** and the curvilinear structure **196** where cassette back wall **194** connects to the first cassette side **190** and the second cassette side **192.** The cassette routing guide **264** is configured to route, organize and maintain the optical fibers in the mounting area **262,** including any optical fibers that may enter the mounting area **262** through an access port **266** in the cassette back wall **194.** Additionally, cassette routing tabs **268** extend from the cassette routing guide **264** and the first mounting side **258** to facilitate the routing of the optical fibers.

Component mounting holes **270** may extend between the first mounting side **258** and the second mounting side **260.** The component mounting holes **270** may be used for interchangeably mounting optical components attached to mounting inserts with tabs that mate with and friction fit into one or more of the component mounting holes **270.** In this manner, different optical components may be removably mounted in the mounting area **262** such that the cassette **46, 48** may be initially configured and subsequently re-configured as necessary for certain applications. As examples, one of the distribution cassettes **48** may have a splice tray mounted in the mounting area **262,** while one of the feeder cassettes **46** may have a coarse wave division multiplexer (CWDM) mounted in mounting area **262.** Subsequently, the feeder cassette **46** may be re-configured by removing the CWDM and mounting a splice tray in the mounting area **262.** Further, the distribution cassette **48** may be subsequently re-configured by removing the splice tray and mounting a multi-fiber connector in the mounting area **262.** Thus the component mounting holes **270** allow for variably configuring the cassettes **46, 48** to address the specific requirements of the optical network. Alternatively or additionally, other ways for mounting optical components in the mounting area **262** may be used, as examples, without limitation, fastener, adhesives and Velcro® fastener, and a combination of one or more thereof.

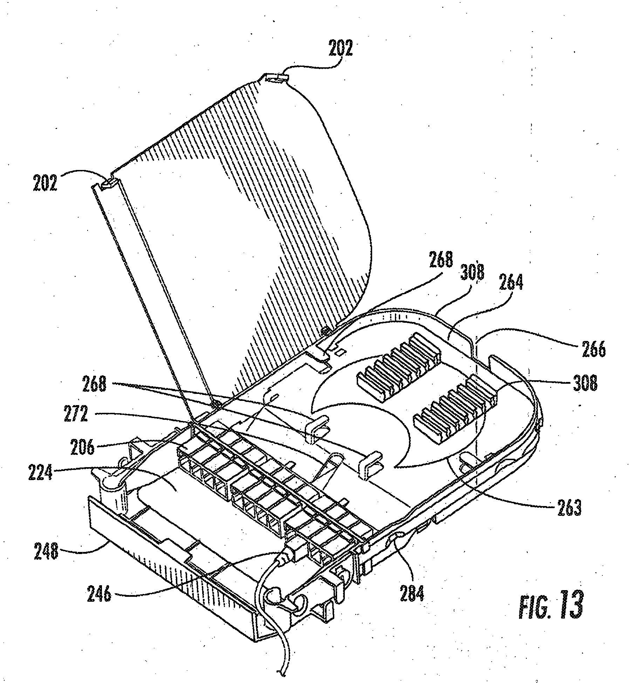

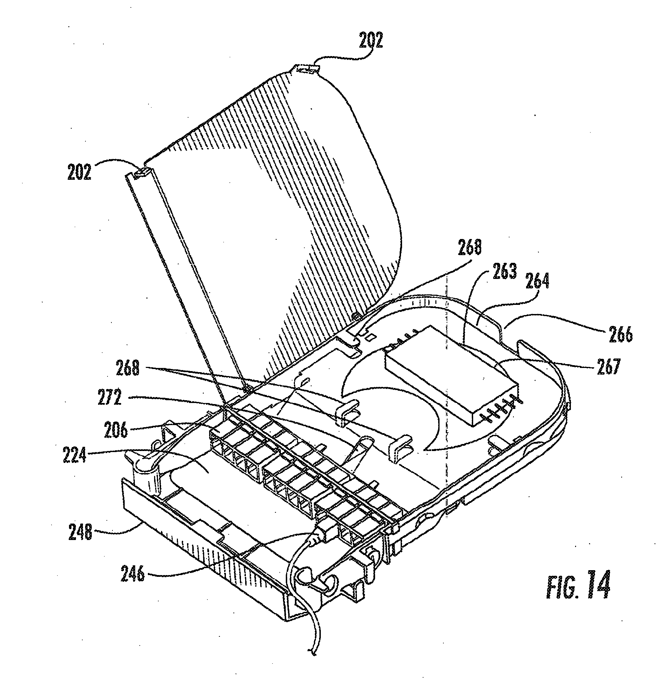

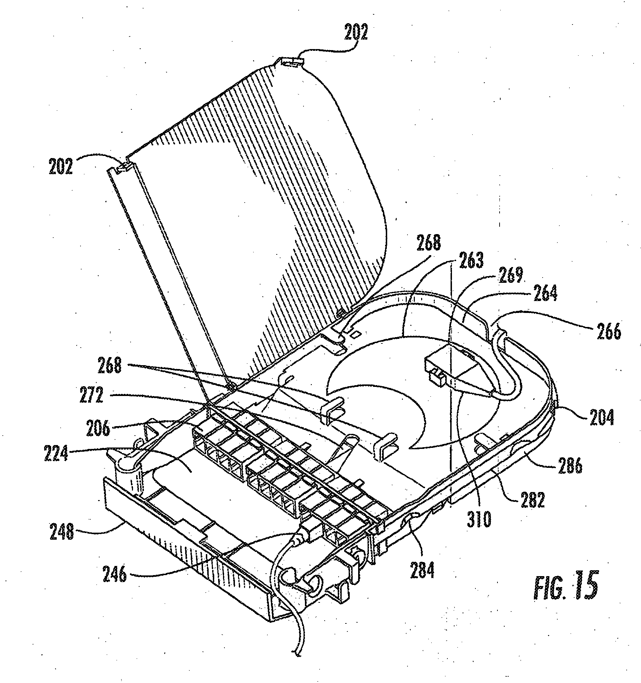

**FIGS. 13****,** **14** and **15** illustrate three exemplary embodiments of cassettes **46, 48** with an insert **263** having a fiber optic component positioned therein using the mounting holes. **FIG. 13** shows an insert **263** with a splice holder **308** positioned in the cassette **46, 48.** **FIG. 14** shows an insert with a CWDM module **267** positioned in the cassette **46**, **48.** And **FIG. 15** shows an insert **263** with a multi-fiber adapter **269,** with a multi-fiber connector **308** positioned in the cassette **46, 48.** In the embodiment illustrated in **FIG. 15****,** another multi-fiber connector **308** may be inserted in the other end of the multi-fiber adapter **269.** A multi-fiber cable, such as, for example a ribbon cable, may extend from the multi-fiber connector **308.** The optical fibers in the multi-fiber cable may furcate out and extend to and connect in the second end **212** of fiber optic adapters **206.** Alternatively or additionally, the multi-fiber connector **308** may not connect to a multi-fiber adapter **269** in the cassette **46, 48.** Instead, enough multi-fiber cable may be provided to allow the multi-fiber connector **308** to extend from the cassette **46, 48** to the enclosure **20** wall and there connect to a multi-fiber adapter **269** mounted in an entry port **140.** In other words, a portion of the multi-fiber cable slack stored in the cassette **46, 48,** may be unwound and removed from the cassette **46, 48.** However, the optical fibers in the multi-fiber cable may still connect with the second end **212** of fiber optic adapters **206.** In this way, an optical connection may be established between the multi-fiber adapter **269** mounted in an entry port **140 and** the second end **212** of fiber optic adapters **206.** It should be understood that **FIGS. 13****,** **14** and **15** are provided to illustrate the modular and configurable characteristics of the cassette **46, 48,** and are not in any manner intended to be limiting in the quantity and/or type of compnents that may be positioned in the cassette **46, 48.** Additionally, although fiber optic components are shown in **FIGS. 13****,** **14** and **15****,** electronic components may also be positioned in the cassette **46,48.**

Continuing with reference to **FIG. 12****,** the first mounting side **258** has a slope **271** that slopes toward the second mounting side **260** at a location adjacent to the cassette front wall **188.** This provides sufficient space for the optical fibers in the mounting area **262** to connect to the second end **212** of the fiber optic adapters **206.** An access opening **272** may extend through the mounting base **256** from the first mounting side **258** to the second mounting side **260.** The access opening **272** may be used to route optical fibers between the first mounting side **258** and the second mounting side **260.**

Referring to **FIGS. 16** and **17****,** the second mounting side **260** is depicted. In the embodiment illustrated in **FIGS. 16** and **17****,** a buffer tube slack storage **274** is mounted to the second mounting side **260.** The buffer tube slack storage **274** removably mounts to the second mounting side **260** using the component mounting holes **270,** as discussed above with respect to the first mounting side **258.** The buffer tube slack storage **274** may be used to store and organize any slack in the optical fibers that enter the cassette **46, 48.** When mounted to the second mounting side **260,** the buffer tube slack storage **274** may be positioned to facilitate the placement of optical fiber buffer tube slack on buffer tube slack storage **274.** This may be done by pulling on the retainer plate **276** which is attached to a telescoping hub **278**. As the telescoping hub **278** extends, a gap **280** forms between the retainer plate **276** and the rest of the cassette **46,48** as illustrated in **FIG. 17****.** The gap **280** allows for placement of optical fiber buffer tube slack on the buffer tube slack storage **274.** Once the optical fiber buffer tube slack is placed on the buffer tube slack storage **274,** the telescoping hub **278** may be retracted by pushing on the retainer plate **276** closing or at least partially closing the gap **280.**

Continuing to refer to **FIGS. 10-17****,** cassette rails **282** extend from the first cassette side **190** and the second cassette side **192.** The cassette rails **282** have a first cassette detent **284** and second cassette detent **286.** In this manner, when inserting or removing the cassette **46, 48** from the movable chassis **34,** the cassette rails **282** may engage with and slide in the rail guides **132** mounted in the chassis top **78** the chassis bottom **80** in the cassette area **40.** Both cassette rails **174** are designed such that either may slide in the rail guides **132** in the chassis top **78** or the chassis bottom **80.** In either case, the cassette **46,48** may be inserted in the cassette area **44** with the rear section **184** first so that the front section **182** extends out of the open front **84** of the movable chassis **34** to provide access to the optical fiber input into the cassette **46, 48.** Each cassette rail **282** has a first cassette detent **284** and second cassette detent **286.** As the cassette **46,48** inserts into the movable chassis **34,** the first cassette detent **284** and the second cassette detent **286** engage protrusions formed in the rail guide **132** as will be discussed in more detail herein with respect to **FIGS. 18A** and **18B****.**

In this regard, **FIGS. 18A** and **18B** are provided to allow for a more detailed discussion of the structure of the rail guide **132.** The front **288** of the rail guide **132** is shown in **FIG. 18A****,** and the back **290** of the rail guide **132** is shown in **FIG. 18B****.** The rail guide **132** may be a generally elongated structure. Two guide walls **292** extend from front of the rail guide **132** to form a rail channel **294** therebetween. Mounting hooks **296** extend from the back **290** of the rail guide **132** and fit into mounting slots in the chassis top **78** and the chassis bottom **80** (not shown in **FIG. 18B****),** allowing the rail guide **132** to be removably mounted to the chassis top **78** and/or the chassis bottom **80.** Alignment pins **298** position in alignment holes in the chassis top and chassis bottom (not shown in **FIG. 18B****)** to retain the guide rail **132** in proper alignment.

A first protrusion **300** and a second protrusion **302** are formed within the rail channel **294.** The first protrusion **300** and the second protrusion **302** are resiliently flexible allowing them to repeatedly flex toward the back **290** of the rail guide **132** and return toward the front **288** of the rail guide **132.** Additionally, the first protrusion **300** and second protrusion **302** each comprise side ramps **304.** When the splice module holder **44** and/or the cassette **46, 48** are inserted in the rail guide **132,** the holder rail **174** and/or the cassette rail **282,** as the case may be, engages with the rail channel **294.** When the holder rail **174** and/or the cassette rail **282** contact the first protrusion **300,** the holder rail **174** or cassette rail **282** contacts the side ramp **304** and forces the first protrusion **300** to flex toward the back **290** of the rail guide **132.** The holder rail **174** and/or cassette rail **282** may slide along the rail channel with the first protrusion **300** flexed towards the back **290** of the rail guide **132** until the second holder detent **178** and/or second cassette detent **286** engages the first protrusion **300.** At that point, the first protrusion **300** is allowed to return toward the front **288** of the rail guide **132** by inserting into the second holder detent **178** and/or the second cassette detent **286,** releasably locking the splice module holder **44** and/or cassette **46, 48** in the movable chassis **34.** This provides a first stop position at which the splice module holder **44** or the cassette **46, 48** may be partially extended out of the movable chassis **34.**

Applying pressure to the splice module holder **44** and/or the cassette **46, 48** causes the holder rail **174** and/or the cassette rail **282** to flex the first protrusion **300** disengaging the second holder detent **178** and/or the second cassette detent **286** from the first protrusion **300** allowing the splice module holder **44** and/or the cassette **46, 48** to slide along the rail channel **294.** The splice module holder **44** and/or cassette **46, 48** may then slide along the rail channel **294** until the second holder detent **178** and/or the second cassette detent **286** engages the second protrusion **302.** At or near to the same time, the first holder detent **176** and/or the first cassette detent **284** engages the first protrusion **300.** The process discussed above occurs again, but this time with the first protrusion **300** flexing and then returning to insert into the first holder detent **176** and/or the first cassette detent **284.** And the second protrusion **302** flexes and returns to insert in the second holder detent **178** and/or the second cassette detent **286.** This provides a second stop position at which the splice module holder **44** and/or cassette **46, 48** may be releasably locked in the movable chassis **34.**

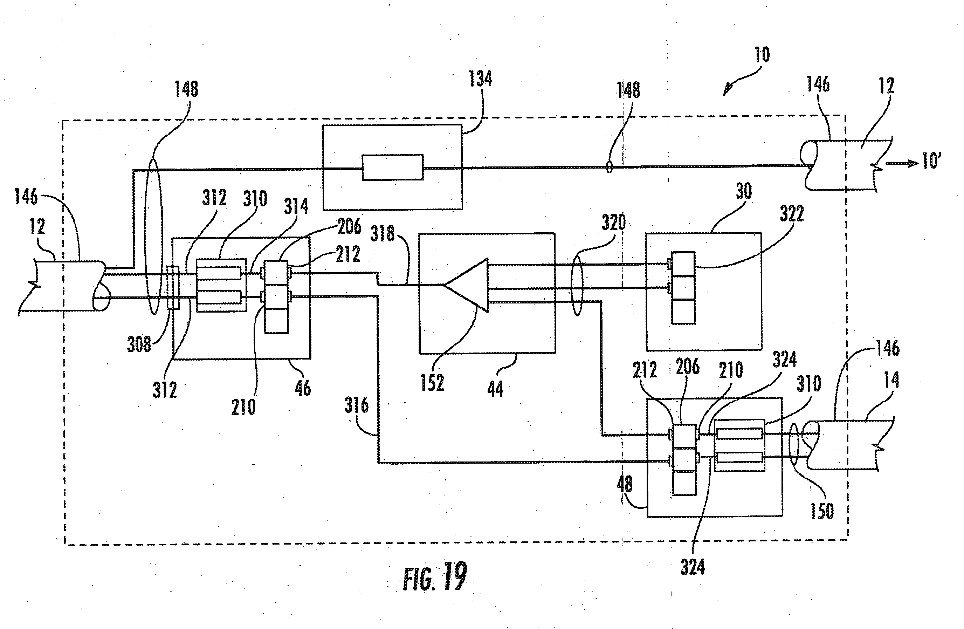

Referring now to **FIG. 19****,** a block diagram illustrates the components and the routing of optical fibers in the fiber optic terminal **10** according to an exemplary embodiment. The blocks and lines interconnecting the blocks as shown in **FIG. 19** are diagrammatic only and are for ease of explanation and not necessarily meant to indicate any specific number of components and/or optical fibers. In **FIG. 19****,** two sections of the feeder cable **12** are shown entering the fiber optic terminal **10.** The feeder cable **12** may extend from and or be optically connected to a central office, central switching station, head end, or the like, of the service provider. As discussed above, the jackets **146** on the feeder cable **12** and the distribution cable **14** are removed when in the fiber optic terminal **10.** An optical fiber **148** from one section of the feeder cable **12** routes to the enclosure splice tray **134,** where it is spliced to another optical fiber **148** from the other section of the feeder cable **12.** The other section of the feeder cable **12** may then route to another fiber optic terminal **10'** or other fiber optic network device. In this manner, more than one fiber optic terminal **10, 10'** may be optically connected to the same feeder cable **12** providing for the concatenation or series connection of the fiber optic terminals **10, 10'.** As an example, the feeder cable **12** may comprise 72 optical fibers **148.** If 12 optical fibers **148** are used in each of the fiber optic terminals **10, 10',** then, 6 fiber optic terminals **10, 10'** may be concatenated on the same feeder cable **12.** However, every time an optical fiber **148** is spliced, some optical signal attenuation may occur, which should be taken into account.

One or more optical fibers **148** may route from the feeder cable **12** to the feeder cassette **46** and connect to a multi-fiber connector **310** mounted in the feeder cassette **46.** The multi-fiber connector **310** may be an MTP connector as commercialized by Corning Cable Systems LLC, Hickory, N.C. The feeder cassette **46** may contain splice holder **308.** Optical fibers **312** from the multi-fiber connector **310** may route to the cassette splice tray **310** where they are spliced to connectorized optical fibers **314** that route to the first end **210** of the fiber optic adapters **206** mounted in the feeder cassette **46.** A connectorized jumper **316** may route directly from one of the second ends **212** of the fiber optic adapter **206** in the feeder cassette **46** to the distribution cassette **48** and connect to one of the second ends **212** of the fiber optic adapters **206** in the distribution cassette **48.**

A connectorized pigtail **318** may route from another one of the second ends **212** of the fiber optic adapters **206** in the feeder cassette **46** to the splitter module **152** and input into the splitter module **152.** The optical signal carried by the connectorized pigtail, or input splitter leg, **318** inputted into the splitter module **152** may be split into multiple optical signals each carried by a separate output splitter leg **320** output from the splitter module **152.** The splitter legs **320** may be connectorized pigtails. One or more of the output splitter legs **320** may route to the connector holders **322** on the connector holder block **50** in the parking area **42** or to the distribution cassette **48.** An output splitter leg **320** routed to the distribution cassette **48** may connect to the second end **212** of the fiber optic adapter **206** in the distribution cassette **48.** A splice holder **308** may be mounted in the distribution cassette **48.** Connectorized optical fibers **324** may route from the first end **210** of the fiber optic adapters **206** in the distribution cassette **48** to the cassette splice tray **310** and splice to optical fibers **150** in a distribution cable **14.** The distribution cable **14** may then route from the fiber optic terminal **10** towards the subscriber premises in the fiber optic network. Additionally, an output splitter leg **320** initially routed to a connector holder **322** may be removed from the connector holder **322** and routed to the distribution cassette **48** and connect to the second end **212** of the fiber optic adapter **206.** In these ways, optical connection is established between the optical fiber in the feeder cable and the optical fiber in the distribution cable, enabling optical connectivity, and thereby optical communication services, between the service providers central office, central switching station, head end, or the like, and the subscriber premises.

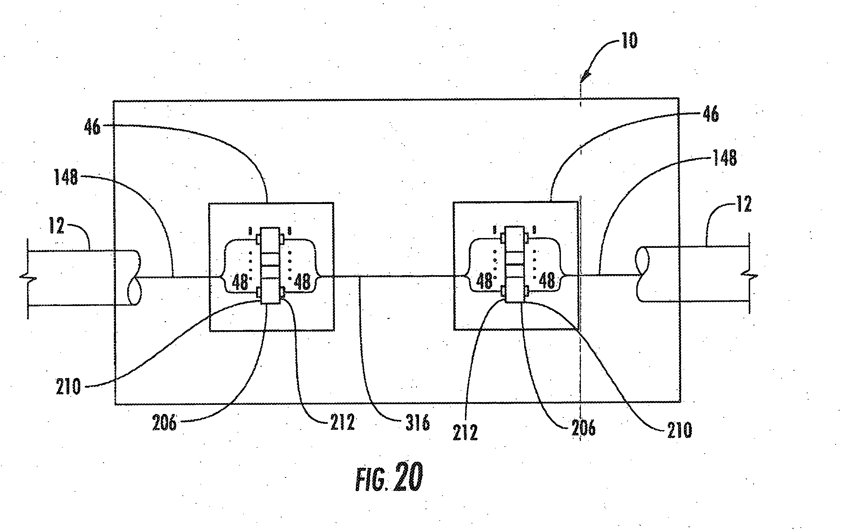

Referring now to **FIG. 20****,** there is shown a block diagram of the fiber optic terminal **10** configured as a cross-connect. In the embodiment shown in **FIG. 20****,** two feeder cables **12** enter the fiber optic terminal **10.** Each of the feeder cables **12.** has 48 optical fibers **148.** Although the feeder cables **12** in this embodiment have 48 optical fibers **148,** the feeder cables **12** may have any quantity of optical fibers. The feeder optical fibers **148** route to feeder cassettes **46** and connect to the first end **210** of fiber optic adapters **206.** A multifiber jumper **316** may then connect to the second ends **212** of each of the feeder cassettes **46.** Although in **FIG. 20**, the optical fibers of the jumper **316** are shown connected to the fiber optic adapters in the same 1 to 48 alignment at each feeder cassette **46** that is just for ease of explanation. Thus, the optical fibers in the jumper **316** may connect to the fiber optic adapters in any order or alignment as required for the particular application.

Referring now to **FIG. 21****,** there is shown a detail of the hanger bracket assembly **18.** The hanger bracket assembly **18** is used for an aerial installation of the fiber optic terminal **10** by suspending the fiber optic terminal **10** from a strand strung between two supports, such as, for example, two utility poles. Additionally, the hanger bracket assembly **18** may be used to suspend the fiber optic terminal **10** from a hanger bar in a pedestal as further discussed herein. The hanger bracket assembly **18** adjustably attaches to the fiber optic terminal **10** using an enclosure mount **330.** The enclosure mount **330** has two attachment holes **332** that may be used for attaching the enclosure mount to the fiber optic terminal **10**. A vertical slot **334** in the enclosure mount is adapted to receive hanger bracket pin **336** extending from hanger bracket **338.** The vertical slot **334** allows the hanger bracket assembly **18** to be vertically adjustable to accommodate any particular space issues. A nut and washer combination **336** may be used to tighten the hanger bracket pin **336** to the enclosure mount **330.** When tightened to the enclosure mount **330,** hanger bracket plate **340** fits into channel pieces **342** that extend from top **344** and bottom **346** of the enclosure mount **330.** By the hanger bracket plate **340** fitting into the channel pieces **342,** the hanger bracket **338** may be held securely stable.

The hanger bracket **338** has a hanger bracket plate **340** extends vertically to and terminates in a curved hanging piece **348.** A tab **350** having a clamp attachment hole **352** extends perpendicularly in the vertical plane from the hanging piece **348.** A clamp pin **354** comprises a bracket end **356,** clamp end **358** and a cubed portion **360** positioned between the bracket end **356** and the clamp end **358.** The clamp pin **354** inserts through the clamp attachment hole **352** at a bracket end **356** where it is secured by a nut **362.** The clamp pin **354** at the clamp end **358** inserts through square openings **364** in first clamp piece **366** and second clamp piece **368.** The first clamp piece **366** and the second clamp piece **368** have similar opposing notches **370.** The strand **16** or a hanger bar (neither of which are shown in **FIG. 21**) may be directed between the first clamp piece **366** and the second clamp piece **368** such that the strand or hanger bar aligns with the notches **370.** The cubed portion **360** is slightly smaller than the square openings **364** to allow it to fit within both square openings **366** but to prevent rotation of the first clamp piece **366** and the second clamp piece **368.** A nut **372** attaches to the clamp end **358** and is tightened against the second clamp piece **368.** When the nut **372** is tightened it forces the second clamp piece **368** against the first clamp piece **366,** thereby, squeezing the strand **16** or hanger bar between the second clamp piece **368** against the first clamp piece **366** and preventing the fiber optic terminal **10** from moving.

A portion of the enclosure mount **330** may be cut-out to form a handle **374.** When the enclosure mount **330** is attached to the fiber optic terminal **10,** the handle **374,** may be used to lift the fiber optic terminal to facilitate attaching the strand bracket assembly **18** to the strand **16.** If an enclosure mount **330** is attached to both ends of the fiber optic terminal **10,** both handles **374** may be used to lift and steady the fiber optic terminal when attaching the strand bracket assembly to the strand **16.**

Referring now to **FIG. 22****,** a portion of the interior space **25** with strain relief members **380** and grounding assembly **138** is illustrated. A feeder cable **12** or distribution cable **14** may enter the enclosure **20** through the entry port **140.** The jacket **146** is removed allowing the optical fiber **148, 150** to route separately within the enclosure **20.** An adjustable clamp **381** may attach the feeder cable **12** or the distribution cable **14** to one of the strain relief members **380** to provide strain relief for the feeder cable **12** or the distribution cable **14.** A ground wire **151** may be routed from the feeder cable **12** or the distribution cable **14** to the grounding assembly **140.**

In the embodiment in **FIG. 22****,** a tonable grounding assembly **138** is illustrated. The grounding assembly **138** provides for the grounding and bonding of armored cables and those with metallic elements. The wire connector **139** attached to the ground wire **151** connects to a ground stud **141** at an insulating plate **143.** A grounding nut **145** tightens the ground stud **141** to a grounding plate **147.** When the grounding nut **145** is tightened, the ground wire **151** is grounded to the grounding plate **147** through the ground stud **141** and, thereby, to the system ground for the fiber optic network. However, when the grounding nut **145** is loosened, the grounding stud **141** is isolated from ground due to the insulation plate **143.** Therefore, the wire connector **139** and the ground wire **151** are also isolated from ground. Because the ground wire **151** is isolated from ground, the feeder cable **12** or the distribution cable **14** may be identified at different points in the fiber optic network by testing using a radio frequency (RF) signal. The RF signal is transmitted from one end of the feeder cable **12** or distribution cable **14,** and detected at another end of the feeder cable **12** or distribution cable **14** at another piece of equipment or terminal.

Referring now to **FIGS. 22A and 22B****,** the fiber optic terminal **10** is illustrated mounted to a pedestal **386.** In this embodiment, the fiber optic terminal **10** may be mounted in a vertical orientation as opposed to a strand mounted as illustrated in **FIG. 1****,** which may be generally in a horizontal orientation. In other words the longitudinal axis **"L"** of the fiber optic terminal **10** may be oriented in a generally vertical direction. Additionally the greatest transverse dimension **"w"** of the fiber optic terminal **10** may be less than the internal diameter **"d"** of a pedestal cover **388.** In this way, the pedestal cover can fit over the fiber optic terminal 10 allowing the fiber optic terminal to be used in standard pedestal installations without the need to redesign the pedestal **386** as shown in FIG. **22A. FIG. 22B** illustrates a mounting detail of the fiber optic terminal **10** using a pedestael bracket **390** which secures to the pedestal **386** and the enclosure **20** of the fiber optic terminal **10.**

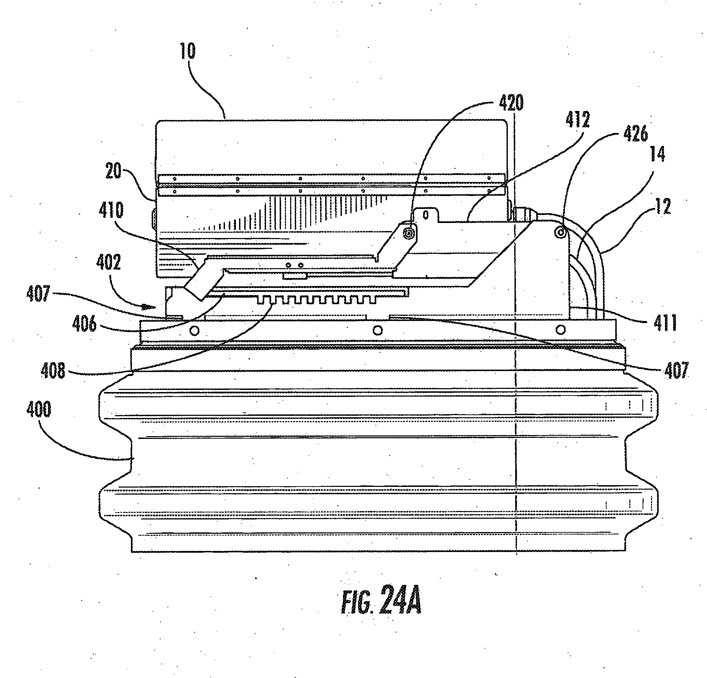

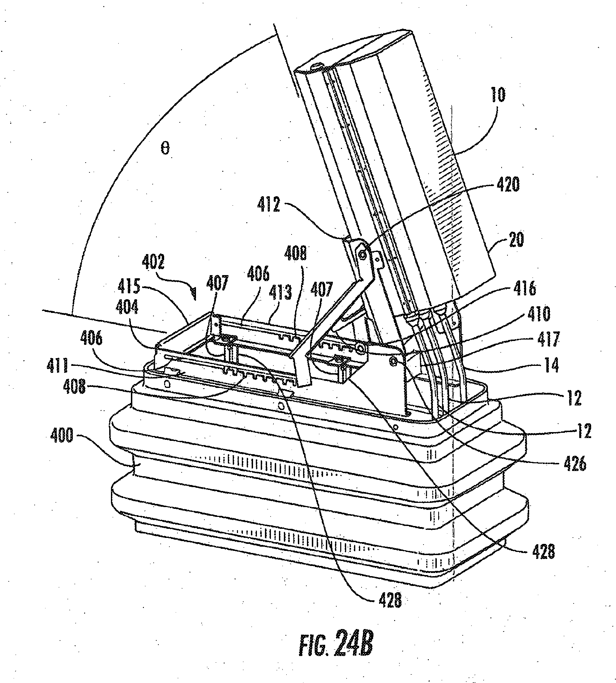

Referring now to **FIG. 24A** **and** **24B****,** the fiber optic terminal 10 is illustrated mounted to a "dog-house" or low-profile pedestal **400.** Typically, multiple system operators (MSO) use the dog-house support **400** to house nodes to convert from optical to electrical signals (coax) and amplifiers to boost coax signals as part of the distribution network. Thus, the dog-house support **400** has been developed to a regular, acceptable design and size for CATV applications. In the embodiment shown in **FIG. 24A** and **FIG. 24B****,** the fiber optic terminal **10** may be mounted to the regular, acceptable dog-house support **400** without any modification or re-design. The fiber optic terminal may mount to the dog-house support **400** using a support assembly **402.** The support assembly **402** may be adapted to provide an inclining motion to the fiber optic terminal **10.** In other words, the support assembly **402** may allow the fiber optic terminal **10** to be tilted upwardly through, and be positioned at different degrees "Φ" of incline, measured from the plane of the top **403** of the dog-house support **400,** which would generally approximate the horizon. Inclining the fiber optic terminal **10** in such a manner may result in the fiber optic terminal 1**0** being more easily accessible to a field technician, and, thereby facilitate the installation, configuration, or re-configuration of the fiber optic terminal **10** by the field technician. Additionally or alternatively, one or more points of the support assembly **402** may be adjustably mounted to the dog-house support **400.** In this manner, the fiber optic terminal may be raised from the top **403** of the dog-house support **400** to also provide better access to a field technician, or to perform effective leveling of the fiber optic terminal **10.**

In this regard, **FIG. 24A** illustrates the fiber optic terminal in a stowed position, generally parallel with the plane of the top **403** of the dog-house support **400** and, generally, horizontal. **FIG. 24B** illustrates the fiber optic terminal in an inclined position. The frame assembly **402** attaches to the dog-house support by frame base **404.** The frame base **404** may be a generally rectangular open frame structure having a first side **411**, a second side **413,** a first end **415** and a second end **417** and defining a frame area **405** therewithin. The frame base **404** may be sized to fit on the top **403** of the dog-house support **400.** Frame base **404** attaches to the dog-house support **400** using one or more adjustable frame support brackets **407.** In the embodiment shown in **FIG 24A** and **FIG. 24B****,** four frame support brackets **407** are shown, two on first side **411** and two on second side **413.** Any number of frame support brackets **407may** be used. The frame base **404** may have frame slots **406** on a first side **411** and a second side **413.** Multiple incline notches **408** are formed along the first side **411** and the second side **413** in at least a portion of the frame slots **406.** The incline notches **408** on the first side **411** are aligned with the incline notches **408** on the second side **413.** Incline brackets **410** may be in a general **"z"** shape and may attach to the frame base **404** at the first side **411** and the second side **413.** Additionally, the incline brackets **410** may also attach to terminal rack **412.**

Referring also now to **FIG. 24B****,** the frame assembly **402** is shown in an inclined orientation with respect to the dog-house support **400.** Frame end **414** of the incline brackets **410** has a frame pin **416.** One frame pin **406** on each incline bracket **410** extends towards the frame area **405** formed by the frame base **404.** The frame pins **416** insert into the frame slots **408** allowing the frame pins **416** to move along the frame slots **408.** A bracket end **418** on each of the incline brackets **410** rotatably attach to the terminal rack **412** on two opposing sides of the terminal rack **412.** The bracket ends **418** rotatably attach to the terminal rack **412** by rack pins **420** that extend from the terminal rack **41.2.** The terminal rack **412** rotatably attaches to a first pivot end **422** the first side **411** and a second pivot end **424** on the second side **413** by pivot pins **426.**

As the frame pins **416** move along the slot **406,** the incline brackets **410** force the terminal rack **412,** and, thereby, the fiber optic terminal **10** to incline. The terminal rack **412** inclines as the first pivot end **422** and the second pivot **424** rotate around pivot pins **426.** The frame pins **416** moving along the slot **405** also cause the bracket **ends 418** to rotate around the rack pins **420.** The frame pins **416** continue to move along the slot **406** until they reach one of the notches **408.** The frame pins **416** may position in one of the notches **408** on the first side **411** and an aligned one of the notches **408** on the second side **413.** The notches **408** may be located on the first side **411** and the second side **413** to coordinate with certain degrees of incline of the fiber optic terminal **10** depending on where the frame pins **416** are located in the slots **406,** and/or into which notches **408** the frame pins **416** position. In the embodiment shown in **FIG. 15** **A** and **15B,** the terminal rack **412,** and, thereby, the fiber optic terminal **10,** may incline in increments "Φ" of 0, 10, 50, and 70 degrees. It should be understood, though, that the support assembly **402** may be designed to incline the fiber optic terminal **10** in any degree increments.

Continuing with reference to **FIG. 24A** and **FIG. 24B****,** the frame support brackets **407** have attachment slots **428** for attaching to the dog-house support **400.** The attachments slots **428** are adapted to receive a fastener, for example, without limitation, a bolt, washer and nut combination. When the fastener is tightened, the height of the support assembly **402,** at that point, above the dog-house support **400** is fixed. Thus, by selectively locating the fastener in the attachment slot **428,** an installer/technician can adjust the height of the support assembly **402** above the dog-house support **400**, This adjustment capability may facilitate installation of the support assembly **402,** for example, to address leveling requirements. Additionally, this adjustment capability may provide for better accessibility to the fiber optic terminal **10** by the installer/technician for configuration and re-configuration of the fiber optic terminal **10.**

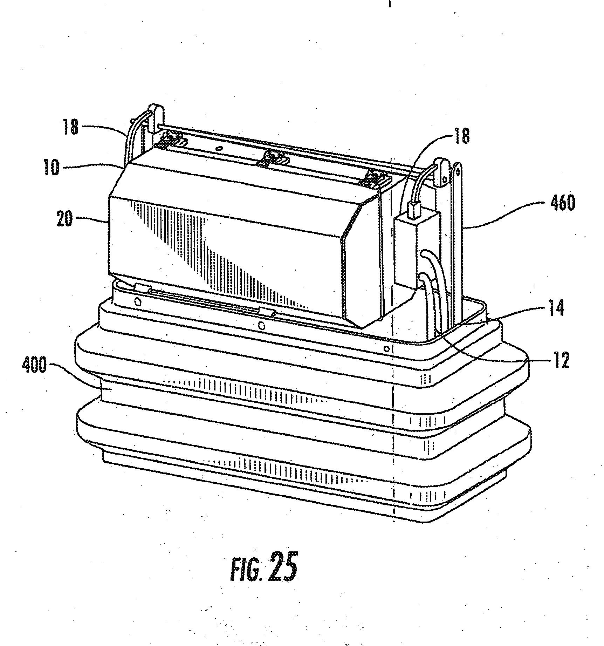

Referring now to **FIGS. 25-28****,** embodiments illustrating other types of installation of the fiber optic terminal **10** are presented.

In **FIG. 25****,** the fiber optic terminal is shown mounted in a dog-house support **400** similar to the one shown in **FIGS. 24A** and **24B****.** In the embodiment shown in **FIG. 25****,** though, the enclosure **20** of the fiber optic terminal **10** is suspended from a hangerbar **460** attached to the dog-house support **400.** Hanger bracket assemblies **18** may be used to suspend the enclosure **20** from the hanger bar **460** in the same way that the enclosure **20** may be suspended from a strand **16** as shown in **FIG. 1****.**

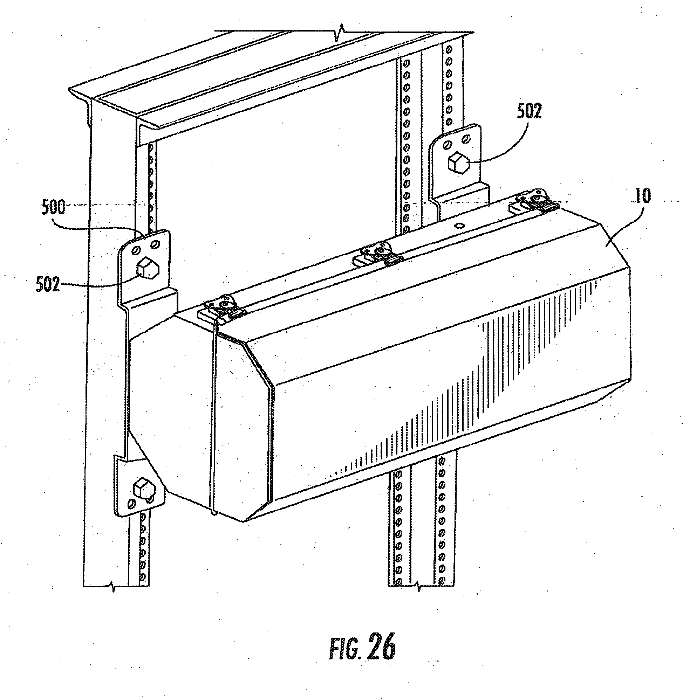

In **FIG. 26****,** the fiber optic terminal **10** is shown mounted to a rack **500.** The rack **500** may be located in a central office, central switching center or the like. Rack mounting brackets **502** may be used to attach the enclosure **20** of the fiber optic terminal **10** to the rack **500** using appropriate fasteners, which may include, without limitation, a bolt and nut combination, or the like. Typically, the fiber optic terminal **10** may be locate towards the top of the rack **500** so that the feeder cable **12** and the distribution cable **14** (not shown in **FIG. 26**) may then be routed from the fiber optic terminal **10** to a cable tray located above the rack **500** (not shown in **FIG. 26**).

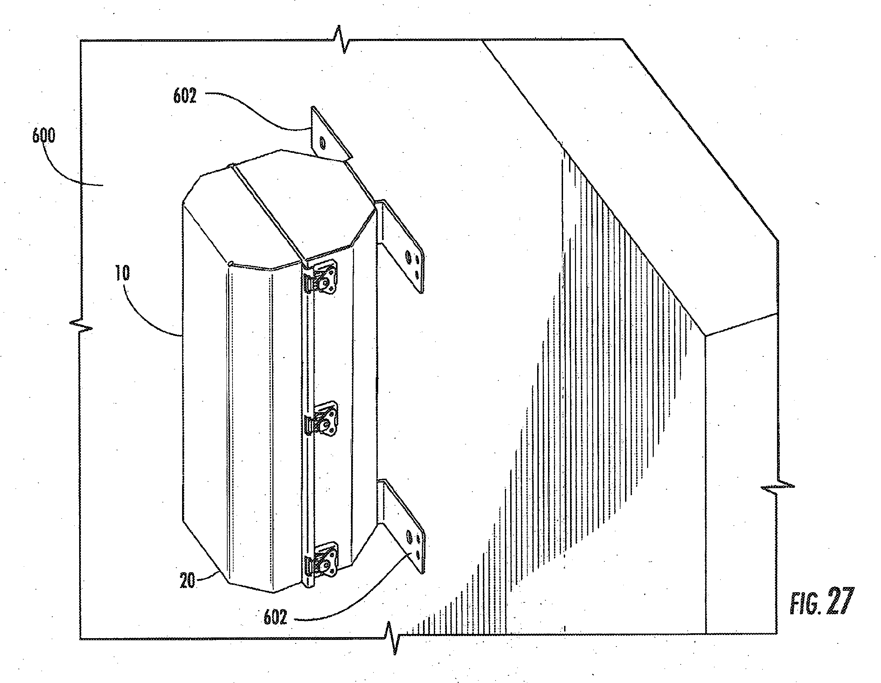

Referring now to **FIG. 27****,** the fiber optic terminal **10** is shown mounted in a vertical orientation to a wall **600.** The wall **600** may be in a room in a multiple dwelling unit (MDU) such that the fiber optic terminal **10** provides a local convergence point for that MDU. Wall brackets **602** may be used to mount the enclosure **20** of the fiber optic terminal **10** to the wall using the appropriate fasteners. Depending on the material from which the wall is constructed, such fasteners, may include, without limitation, anchor bolts, molly bolts, concrete anchors, or the like.

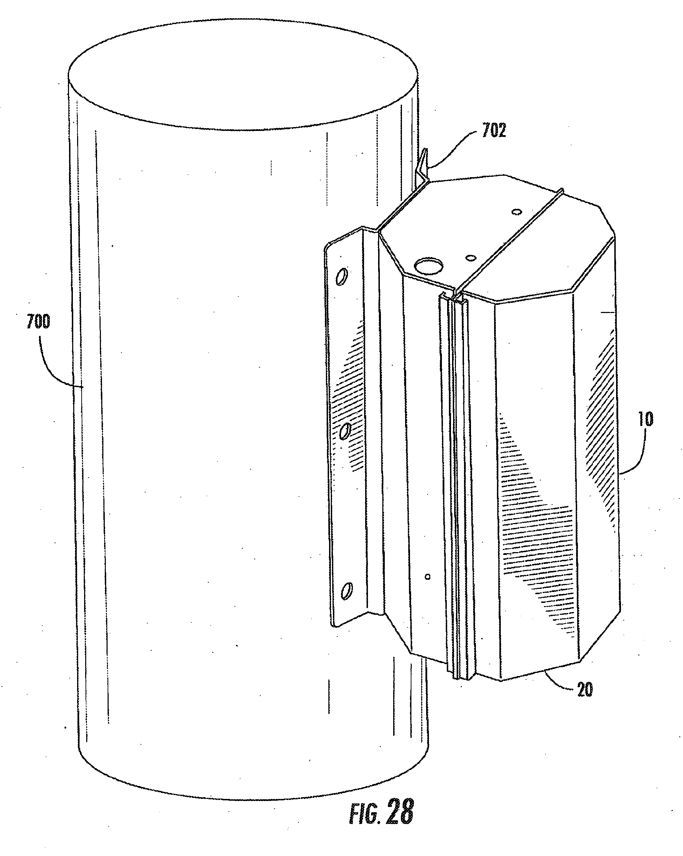

Referring now to **FIG. 28****,** the fiber optic terminal **10** is shown mounted to a generally vertical support **700,** such as a utility pole. The support **700** may be a point in an aerial installation which does not have access to a strand for strand mounting as shown in **FIG. 1****.** A pole bracket **702** may be used to mount the enclosure **20** of the fiber optic terminal **10** to the support **700** using appropriate fasteners. Depending on the material from which the pole is constructed, such fasteners may include, without limitation, nails, wood screws, a metal strap wrapped around the pole, or the like.

It is to be understood that the invention is not to be limited to the specific embodiments disclosed and that modifications and other embodiments are intended to be included within the scope of the appended claims. It is intended that the present invention cover the modifications and variations of this invention provided they come within the scope of the appended claims. Although specific terms are employed herein, they are used in a generic and descriptive sense only and not for purposes of limitation.

## Claims

1. A fiber optic terminal, comprising:
an enclosure (20) having a base (22) and a cover (24) defining an interior space (25), a feeder cable port for receiving into the interior space (25) a feeder cable (12) having at least one optical fiber, and a distribution cable port for receiving into the interior space (25) a distribution cable (14) having at least one optical fiber;
at least one splitter module holder (44) positioned in the interior space (25); and
at least one cassette movably positioned in the interior space (25), wherein the at least one optical fiber of the feeder cable (12) and the at least one optical fiber of the distribution cable (14) are optically connected through the at least one feeder cassette (46) and the at least one distribution cassette (48), and
wherein the interior space (25) is variably configurable by changeably positioning the at least one splitter module holder (44) and the at least one cassette in the interior space (25),
a movable chassis (34) positioned in the interior space (25), wherein the movable chassis (34) comprises a splitter holder area (38), and a cassette area (40), and wherein the at least one splitter module movably positions in the splitter holder area (38) and wherein the at least one cassette movably positions in the cassette area (40); whereby the movable chassis (34) is movable at least between a first position, a second position and a third position, the first position comprises the movable chassis (34) positioned in the base (22) adjacent to a back of the base (22) when the enclosure (20) is closed, the second position comprises the movable chassis (34) partially extended from the base and tilted away from the cover, and wherein the movable chassis (34) automatically moves from the first position to the second position when the enclosure is opened.

2. The fiber optic terminal of claim 1, further **characterized by**:
at least one splitter module movably positioned in the splitter module holder (44), wherein the at least one splitter module has an input optical fiber and a plurality of output optical fibers, and wherein the at least one optical fiber of the feeder cable (12) optically connects to the input optical fiber, and wherein the at least one optical fiber of the distribution cable (14) optically connects to one of the plurality of output optical fibers, and wherein the interior space (25) is variably configurable by changeably positioning at least one of the at least one splitter module.

3. The fiber optic terminal of claim 1, **characterized in that** the movable chassis (24) comprises a parking area (42), and further comprising a plurality of connector holders positioned in the parking area (42), wherein at least one of the plurality of output optical fibers routes to one of the plurality of connector holders in the parking area (42).

4. The fiber optic terminal of claim 1, further **characterized by** a double hinge assembly (52) between the movable chassis (34) and the cover (24).

5. The fiber optic terminal of claim 1, **characterized in that** the third position comprises the movable chassis (34) positioned in the cover (24) when the enclosure (20) is open.

6. The fiber optic terminal of one of claims 1-3, further **characterized by** a protective shield (70) movably attached to the movable chassis (34), and movable between a covered position and a raised position, wherein the protective shield (70) in the covered position covers at least a portion of the movable chassis (34) including a portion of the at least one splitter module holder, the at least one cassette, and the parking area.

7. The fiber optic terminal of claim 6, **characterized in that** the protective shield (70) is movable from the covered position to the raised position when the enclosure is open, and wherein the protective shield (70) moves independently of movement of the movable chassis (34).

8. The fiber optic terminal of claim 1, further **characterized by** a fiber management area (135) in the interior space (25) adjacent to the base, wherein at least one of the optical fibers of the feeder cable (12) and the optical fibers of the distribution cable (14) are routed and stored, and wherein the fiber management area (135) is accessible when the movable chassis is in the third position.

9. The fiber optic terminal of claim 1, **characterized in that** the at least one cassette is one of a feeder cassette (46) and a distribution cassette (48).

10. The fiber optic terminal of claim 9, **characterized in that** the feeder cassette (46) and a distribution cassette (48) are interchangeable.

11. A method for distributing optical signals from a service provider to a subscriber, comprising the steps of
providing an enclosure (20) having a base (22) and a cover (24) defining an interior space (25), a feeder cable port for receiving into the interior space (25) a feeder cable (12) having at least one optical fiber, and a distribution cable port for receiving into the interior space (25) a distribution cable (14) having at least one optical fiber;
positioning a movable chassis (34) in the interior space (25), wherein the movable chassis comprises a cassette area (40); and
movably positioning at least one cassette in the cassette area (40), wherein the at least one optical fiber of the feeder cable (12) and the at least one optical fiber of the distribution cable (14) are optically connected through the at least one feeder cassette (46) and the at least one distribution cassette (48), and
wherein the interior space (25) is variably configurable by changeably positioning at least one splitter module holder (44) and the at least one cassette in the interior space (25);
the movable chassis comprises a splitter holder area, whereby the movable chassis is movable at least between a first position, a second position and a third position, the first position comprises the movable chassis (34) positioned in the base (22) adjacent to a back of the base (22) when the enclosure (20) is closed, the second position comprises the movable chassis (34) partially extended from the base and tilted away from the cover, wherein the movable chassis (34) automatically moves from the first position to the second position when the enclosure is opened and further comprising the steps of
movably positioning the at least one splitter module holder (44) in the splitter holder area; and
movably positioning at least one splitter module in the splitter module holder (44), wherein the at least one splitter module has an input optical fiber and a plurality of output optical fibers, and wherein the at least one optical fiber of the feeder cable (12) optically connects to the input optical fiber, and wherein the at least one optical fiber of the distribution cable (14) optically connects to one of the plurality of output optical fibers.

## Patentansprüche

1. Faseroptische Anschlusseinheit, umfassend:
ein Gehäuse (20) mit einem Grundteil (22) und einem Deckel (24), das einen Innenraum (25) definiert, einem Zuleitungskabelanschluss zur Aufnahme eines Zuleitungskabels (12) mit mindestens einer Glasfaser in dem Innenraum (25), und einem Verteilerkabelanschluss zur Aufnahme eines Verteilerkabels (14) mit mindestens einer Glasfaser in dem Innenraum (25);
mindestens einen im Innenraum (25) angeordneten Splitter-Modulträger (44); und
mindestens eine beweglich im Innenraum (25) angeordnete Kassette, wobei die mindestens eine Glasfaser des Zuleitungskabels (12) und die mindestens eine Glasfaser des Verteilerkabels (14) durch die mindestens eine Zuleitungskassette (46) und die mindestens eine Verteilerkassette (48) optisch verbunden sind, und
wobei der Innenraum (25) variabel konfigurierbar ist, indem der mindestens eine Splitter-Modulträger (44) und die mindestens eine Kassette im Innenraum (25) veränderlich angeordnet werden,
ein im Innenraum (25) angeordnetes bewegliches Chassis (34), wobei das bewegliche Chassis (34) einen Splitter-Trägerbereich (38) und einen Kassettenbereich (40) umfasst, und wobei das mindestens eine Splitter-Modul beweglich im Splitter-Trägerbereich (38) angeordnet ist und wobei die mindestens eine Kassette beweglich im Kassettenbereich (40) angeordnet ist; wobei das bewegliche Chassis (34) mindestens zwischen einer ersten Position, einer zweiten Position und einer dritten Position beweglich ist, die erste Position die Anordnung des beweglichen Chassis (34) im Grundteil (22) anliegend an der Rückseite des Grundteils (22) umfasst, wenn das Gehäuse (20) geschlossen ist, die zweite Position die Anordnung des beweglichen Chassis (34) teilweise vom Grundteil abgehoben und vom Deckel weg geneigt umfasst, und wobei sich das bewegliche Chassis (34) automatisch von der ersten in die zweite Position bewegt, wenn das Gehäuse geöffnet wird.

2. Faseroptische Anschlusseinheit nach Anspruch 1, weiterhin **gekennzeichnet durch**:
mindestens ein beweglich im Splitter-Modulträger (44) angeordnetes Splitter-Modul, wobei das mindestens eine Splitter-Modul über eine Eingangsglasfaser und eine Mehrzahl von Ausgangsglasfasern verfügt und wobei die mindestens eine Glasfaser des Zuleitungskabels (12) optisch mit der Eingangsglasfaser verbunden ist, und wobei die mindestens eine Glasfaser des Verteilerkabels (14) optisch mit einer der Mehrzahl von Ausgangsglasfasern verbunden ist, und wobei der Innenraum (25) **durch** veränderliche Anordnung mindestens eines des mindestens einen Splitter-Moduls variabel konfigurierbar ist.

3. Faseroptische Anschlusseinheit nach Anspruch 1, **dadurch gekennzeichnet, dass** das bewegliche Chassis (24) einen Parkbereich (42) und weiterhin eine Mehrzahl von im Parkbereich (42) angeordneten Steckverbinderhaltern umfasst, wobei mindestens eine der Mehrzahl von Ausgangsglasfasern zu einem der Mehrzahl von Steckverbinderhaltern im Parkbereich (42) führt.

4. Faseroptische Anschlusseinheit nach Anspruch 1, weiterhin **gekennzeichnet durch** eine Doppelscharnierbaugruppe (52) zwischen dem beweglichen Chassis (34) und dem Deckel (24).

5. Faseroptische Anschlusseinheit nach Anspruch 1, **dadurch gekennzeichnet, dass** die dritte Position die Anordnung des beweglichen Chassis (34) im Deckel (24) umfasst, wenn das Gehäuse (20) offen ist.

6. Faseroptische Anschlusseinheit nach einem der Ansprüche 1-3, weiterhin **gekennzeichnet durch** eine beweglich am beweglichen Chassis (34) angebrachte und zwischen einer Abdeckposition und einer angehobenen Position bewegliche Schutzblende (70), wobei die Schutzblende (70) in der Abdeckposition mindestens einen Teil des beweglichen Chassis (34) einschließlich eines Teils des mindestens einen Splitter-Modulträgers, der mindestens einen Kassette und des Parkbereichs abdeckt.

7. Faseroptische Anschlusseinheit nach Anspruch 6, **dadurch gekennzeichnet, dass** die Schutzblende (70) von der Abdeckposition in die angehobene Position bewegbar ist, wenn das Gehäuse offen ist, und wobei sich die Schutzblende (70) unabhängig von der Bewegung des beweglichen Chassis (34) bewegt.

8. Faseroptische Anschlusseinheit nach Anspruch 1, weiterhin **gekennzeichnet durch** einen an dem Grundteil angrenzenden Fasermanagementbereich (135) im Innenraum (25), in dem mindestens eine der Glasfasern des Zuleitungskabels (12) und die Glasfasern der Verteilerkabels (14) geführt und gelagert werden, und wobei der Fasermanagementbereich (135) zugänglich ist, wenn sich das bewegliche Chassis in der dritten Position befindet.

9. Faseroptische Anschlusseinheit nach Anspruch 1, **dadurch gekennzeichnet, dass** die mindestens eine Kassette entweder eine Zuleitungskassette (46) oder eine Verteilerkassette (48) ist.

10. Faseroptische Anschlusseinheit nach Anspruch 9, **dadurch gekennzeichnet, dass** die Zuleitungskassette (46) und eine Verteilerkassette (48) gegeneinander austauschbar sind.

11. Verfahren zur Verteilung von optischen Signalen von einem Diensteanbieter zu einem Teilnehmer, umfassend die folgenden Schritte:
Bereitstellen eines Gehäuses (20) mit einem Grundteil (22) und einem Deckel (24), das einen Innenraum (25) definiert, einem Zuleitungskabelanschluss zur Aufnahme eines Zuleitungskabels (12) mit mindestens einer Glasfaser in den Innenraum (25), und einem Verteilerkabelanschluss zur Aufnahme eines Verteilerkabels (14) mit mindestens einer Glasfaser in den Innenraum (25);
Anordnen eines beweglichen Chassis (34) im Innenraum (25), wobei das bewegliche Chassis einen Kassettenbereich (40) umfasst, und
bewegliches Anordnen mindestens einer Kassette im Kassettenbereich (40), wobei die mindestens eine Glasfaser des Zuleitungskabels (12) und die mindestens eine Glasfaser des Verteilerkabels (14) durch die mindestens eine Zuleitungskassette (46) und die mindestens eine Verteilerkassette (48) optisch verbunden sind, und
wobei der Innenraum (25) variabel konfigurierbar ist, indem der mindestens eine Splitter-Modulträger (44) und die mindestens eine Kassette im Innenraum (25) veränderlich angeordnet werden;
das bewegliche Chassis (34) einen Splitter-Trägerbereich aufweist, wobei das bewegliche Chassis mindestens zwischen einer ersten Position, einer zweiten Position und einer dritten Position beweglich ist, die erste Position die Anordnung des beweglichen Chassis (34) im Grundteil (22) anliegend an der Rückseite des Grundteils (22) umfasst, wenn das Gehäuse (20) geschlossen ist, die zweite Position die Anordnung des beweglichen Chassis (34) teilweise vom Grundteil abgehoben und vom Deckel weg geneigt umfasst, und wobei sich das bewegliche Chassis (34) automatisch von der ersten in die zweite Position bewegt, wenn das Gehäuse geöffnet wird, weiterhin umfassend die folgenden Schritte:
bewegliches Anordnen des mindestens einen Splitter-Modulträgers (44) im Splitter-Trägerbereich; und
bewegliches Anordnen mindestens eines Splitter-Moduls im Splitter-Modulträger (44), wobei das mindestens eine Splitter-Modul über eine Eingangsglasfaser und eine Mehrzahl von Ausgangsglasfasern verfügt und wobei die mindestens eine Glasfaser des Zuleitungskabels (12) optisch mit der Eingangsglasfaser verbunden ist, und wobei die mindestens eine Glasfaser des Verteilerkabels (14) optisch mit einer der Mehrzahl von Ausgangsglasfasern verbunden ist.

## Revendications

1. Terminal de fibres optiques, comprenant :
un boîtier (20) comportant un socle (22) et un couvercle (24) définissant un espace intérieur (25), un accès pour câble d'alimentation permettant d'introduire dans l'espace intérieur (25) un câble d'alimentation (12) comportant au moins une fibre optique et un accès pour câble de distribution permettant d'introduire dans l'espace intérieur (25) un câble de distribution (14) comportant au moins une fibre optique ;
au moins un porte-module répartiteur (44) positionné dans l'espace intérieur (25) ; et
au moins une cassette positionnée de façon mobile dans l'espace intérieur (25), ladite au moins une fibre optique du câble d'alimentation (12) et ladite au moins une fibre optique du câble de distribution (14) se raccordant optiquement par l'intermédiaire de ladite au moins une cassette d'alimentation (46) et de ladite au moins une cassette de distribution (48), et
dans lequel l'espace intérieur (25) est configurable de façon variable en positionnant de façon changeable ledit au moins un porte-module répartiteur (44) et ladite au moins une cassette dans l'espace intérieur (25),
un châssis mobile (34) positionné dans l'espace intérieur (25), le châssis mobile (34) comprenant une zone de porte-répartiteur (38) et une zone de cassette (40), et ledit au moins un module répartiteur se positionne de façon mobile dans la zone de porte-répartiteur (38) et ladite au moins une cassette se positionne de façon mobile dans la zone de cassette (40) ; moyennant quoi le châssis mobile (34) est mobile au moins entre une première position, une deuxième position et une troisième position, la première position comprend le châssis mobile (34) positionné dans le socle (22) en position adjacente à un dos du socle (22) lorsque le boîtier (20) est fermé, la deuxième position comprend le châssis mobile (34) faisant partiellement saillie du socle et incliné à l'écart du couvercle, le châssis mobile (34) effectuant un mouvement automatique de la première position à la deuxième position lorsque le boîtier est ouvert.

2. Terminal de fibres optiques selon la revendication 1, **caractérisé en outre par** :
au moins un module répartiteur positionné de façon mobile dans le porte-module répartiteur (44), ledit au moins un module répartiteur comportant une fibre optique d'entrée et une pluralité de fibres optiques de sortie, et ladite au moins une fibre optique du câble d'alimentation (12) se raccordant optiquement à la fibre optique d'entrée et ladite au moins une fibre optique du câble de distribution (14) se raccordant optiquement à l'une de la pluralité de fibres optiques de sortie, et l'espace intérieur (25) étant configurable de façon variable en positionnant de façon changeable le ou au moins un des modules répartiteurs.

3. Terminal de fibres optiques selon la revendication 1, **caractérisé en ce que** le châssis mobile (24) comprend une zone de parcage (42), et comprenant en outre une pluralité de porte-connecteur positionnés dans la zone de parcage (42), au moins une de la pluralité de fibres optiques de sortie étant acheminée jusqu'à l'un de la pluralité de porte-connecteur dans la zone de parcage (42).

4. Terminal de fibres optiques, **caractérisé en outre par** un ensemble à double charnière (52) entre le châssis mobile (34) et le couvercle (24).

5. Terminal de fibres optiques selon la revendication 1, **caractérisé en ce que** la troisième position comprend le châssis mobile (34) positionné dans le couvercle (24) lorsque le boîtier (20) est ouvert.

6. Terminal de fibres optiques selon l'une des revendications 1 à 3, **caractérisé en outre par** un volet de protection (70) monté de façon mobile sur le châssis mobile (34) et mobile entre une position couverte et une position relevée, le volet de protection (70) couvrant, dans la position couverte, au moins une partie du châssis mobile (34) y compris une partie dudit au moins un porte-module répartiteur, de ladite au moins une cassette et de la zone de parcage.

7. Terminal de fibres optiques selon la revendication 6, **caractérisé en ce que** le volet de protection (70) est mobile de la position couverte à la position relevée lorsque le boîtier est ouvert, le mouvement du volet de protection (70) étant indépendant du mouvement du châssis mobile (34).

8. Terminal de fibres optiques selon la revendication 1, **caractérisé en outre par** une zone de gestion de fibres (135) dans l'espace intérieur (25) en position adjacente au socle, au moins une des fibres optiques du câble de distribution (12) et des fibres optiques du câble de distribution (14) étant acheminée et rangée, et la zone de gestion de fibres (135) étant accessible lorsque le châssis mobile occupe la troisième position.

9. Terminal de fibres optiques selon la revendication 1, **caractérisé en ce que** ladite au moins une cassette est une cassette d'alimentation (46) ou bien une cassette de distribution (48).

10. Terminal de fibres optiques selon la revendication 9, **caractérisé en ce que** la cassette d'alimentation (46) et une cassette de distribution (48) sont interchangeables.

11. Procédé de distribution de signaux optiques d'un prestataire de services à un abonné, le procédé comprenant les étapes consistant à
procurer un boîtier (20) comportant un socle (22) et un couvercle (24) définissant un espace intérieur (25), un accès pour câble d'alimentation permettant d'introduire dans l'espace intérieur (25) un câble d'alimentation (12) comportant au moins une fibre optique et un accès pour câble de distribution permettant d'introduire dans l'espace intérieur (25) un câble de distribution (14) comportant au moins une fibre optique ;
positionner un châssis mobile (34) dans l'espace intérieur (25), le châssis mobile comprenant une zone de cassette (40) ; et
positionner de façon mobile au moins une cassette dans la zone de cassette (40), ladite au moins une fibre optique du câble d'alimentation (12) et ladite au moins une fibre optique du câble de distribution (14) se raccordant optiquement par l'intermédiaire de ladite au moins une cassette d'alimentation (46) et de ladite au moins une cassette de distribution (48) ; et
dans lequel l'espace intérieur (25) est configurable de façon variable en positionnant de façon changeable au moins un porte-module répartiteur (44) et ladite au moins une cassette dans l'espace intérieur (25) ;
le châssis mobile comprend une zone de porte-répartiteur, moyennant quoi le châssis mobile est mobile au moins entre une première position, une deuxième position et une troisième position, la première position comprend le châssis mobile (34) positionné dans le socle (22) en position adjacente à un dos du socle (22) lorsque le boîtier (20) est fermé, la deuxième position comprend le châssis mobile (34) faisant partiellement saillie du socle et incliné à l'écart du couvercle, le châssis mobile (34) effectuant un mouvement automatique de la première position à la deuxième position lorsque le boîtier est ouvert, et le procédé comprenant en outre les étapes consistant à
positionner de façon mobile ledit au moins un porte-module répartiteur (44) dans la zone de porte-répartiteur ; et
positionner de façon mobile au moins un module répartiteur dans le porte-module répartiteur (44), ledit au moins un module répartiteur comportant une fibre optique d'entrée et une pluralité de fibres optiques de sortie, et ladite au moins une fibre optique du câble d'alimentation (12) se raccordant optiquement à la fibre optique d'entrée et ladite au moins une fibre optique du câble de distribution (14) se raccordant optiquement à l'une de la pluralité de fibres optiques de sortie.
